(19) Europäisches Patentamt
European Patent Office
Office européen des brevets

(11) EP 4 561 415 B1

(12) # FASCICULE DE BREVET EUROPEEN

(45) Date de publication et mention de la délivrance du brevet:
**22.04.2026 Bulletin 2026/17**

(21) Numéro de dépôt: **23761182.7**

(22) Date de dépôt: **28.07.2023**

(51) Classification Internationale des Brevets (IPC):
***A47J 36/02*** *(2006.01)* ***B05D 5/08*** *(2006.01)*
***B05D 7/14*** *(2006.01)* ***C09D 11/037*** *(2014.01)*
***C09D 11/50*** *(2014.01)* ***G01K 11/12*** *(2021.01)*

(52) Classification Coopérative des Brevets (CPC):
**A47J 36/02; A47J 36/025; B05D 5/08; B05D 7/14; C09D 11/037; C09D 11/50; G01K 11/12;**
B05D 2202/25; B05D 2350/63; B05D 2425/01; B05D 2601/02; B05D 2601/26

(86) Numéro de dépôt international:
**PCT/FR2023/051212**

(87) Numéro de publication internationale:
**WO 2024/023475 (01.02.2024 Gazette 2024/05)**

(54) **REVÊTEMENT NON-FLUORÉ HYBRIDE PAEK/THERMOPLASTIQUES HÉTÉROCYCLIQUES/ RÉSINE SILICONE**

NICHT-FLUOR-BESCHICHTETES HYBRID-PAEK/HETEROCYCLISCHE THERMOPLASTIK/ SILIKONHARZ

NON-FLUORINE COATING HYBRID PAEK/HETEROCYCLIC THERMOPLASTICS/SILICONE RESIN

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.07.2022 FR 2207885**

(43) Date de publication de la demande:
**04.06.2025 Bulletin 2025/23**

(73) Titulaire: **SEB S.A.**
**69130 Ecully (FR)**

(72) Inventeurs:
- **GANTILLON, Barbara**
  **69134 Ecully Cedex (FR)**
- **LE BRIS, Stéphanie**
  **69134 Ecully Cedex (FR)**
- **TANGUY, Perrine**
  **69134 Ecully Cedex (FR)**

(74) Mandataire: **SEB Développement**
**Direction Propriété industrielle - Brevets**
**112, chemin du Moulin Carron**
**Campus SEB - CS 90229**
**69134 Ecully Cedex (FR)**

(56) Documents cités:
**FR-A1- 2 925 273**
**US-A1- 2015 203 703**
**US-A1- 2022 073 785**

Il est rappelé que: Dans un délai de neuf mois à compter de la publication de la mention de la délivrance du brevet européen au Bulletin européen des brevets, toute personne peut faire opposition à ce brevet auprès de l’Office européen des brevets, conformément au règlement d’exécution. L’opposition n’est réputée formée qu’après le paiement de la taxe d’opposition. (Art. 99(1) Convention sur le brevet européen).

EP 4 561 415 B1

## Description

L'invention s'applique dans le domaine des revêtements anti-adhésifs pour surface de cuisson des articles culinaires et appareils électriques de cuisson.

Les articles culinaires revêtus en PTFE (polytetrafluoroéthylène) ont la faveur du marché car ils permettent une cuisson ne nécessitant pas, ou peu, de matières grasses ajoutées et sont d'un entretien facile. Toutefois, une faiblesse inhérente à ces revêtements est leur faible résistance mécanique, notamment à chaud.

Pour y remédier, de nombreuses solutions techniques ont été proposées qui consistent à renforcer le revêtement par des charges dures ou par l'interposition de sous couches dures de type inorganiques ou organiques.

Dans le cas des primaires renforcés par des charges dures organiques ou inorganiques, on observe effectivement des améliorations importantes pour la résistance à l'abrasion mais on observe tout aussi bien des impacts au métal lors de la cuisson d'aliments telles que des côtes de porc ou lors de l'utilisation de spatules métalliques.

Dans le cas de bases dures inorganiques telles que par exemple celles réalisées à partir d'un émail ou encore d'oxydes métalliques, la résistance à l'abrasion est encore améliorée et le problème des impacts est limité sans toutefois être supprimé.

On connait également les sous-couches de polymères organiques. Ces sous-couches permettent effectivement de diminuer considérablement l'apparition de la rayure voire de la supprimer. Cette stratégie est donc très intéressante. Les polymères utilisés sont très souvent des thermoplastiques de haute résistance thermique et possédant un point de fusion élevé comme par exemple les polyarylethercétone et notamment l'oxy-1,4-phenylènephénylène-oxy-1,4-phénylène-carbonyle-1,4-phénylène ou PEEK ou encore les sulfures de phénylène.

Le polymère PEEK est intéressant dans les articles culinaires puisqu'il présente un haut point de fusion (343°C) et une excellente stabilité thermique dans des conditions d'usage à 260°C.

Les techniques d'enduction suivantes peuvent être réalisées pour obtenir une sous-couche à partir de ce type de polymère : l'enduction par spray, au rouleau, au rideau, par tampographie, sérigraphie, projection thermique, pistolage électrostatique, jet d'encre.

Dans la demande WO 2000/54895, il est mentionné l'utilisation d'une sous-couche composée uniquement de PEEK (avec des tailles de particules comprises entre 5 µm et 100 µm, et avec un d50 de préférence de 20 µm) déposée sur un substrat métallique, avec un recouvrement compris entre 60 % à 95 % de la surface de l'article puis recouverte d'un revêtement antiadhésif en mono- ou multicouche, à base de résines fluorées et copolymères fluorés. La sous-couche PEEK est déposée soit par tampographie ou sérigraphie, soit par spray sous forme de dispersion.

L'épaisseur de cette couche de PEEK est comprise entre 5 µm et 100 µm.

L'inconvénient du procédé tel que décrit est qu'il impose une double cuisson du revêtement fluoré à base de PEEK. La première cuisson nécessite une température supérieure au point de fusion du polymère composant la sous-couche (soit entre 380 et 400°C pour le PEEK) afin de permettre son adhésion au substrat métallique. Il faut ensuite refroidir fortement l'article, ce qui est très coûteux en temps et en énergie, mais indispensable pour pouvoir appliquer les couches successives fluorées qui seront frittées lors d'une seconde cuisson à haute température (> 420°C).

Dans la demande WO 2010/130954, il est décrit une sous-couche dure formant un réseau continu, déposé de façon discontinu sur le fond intérieur de l'article culinaire. Le matériau composant cette couche est une céramique (mélange alumine-titane) ou un métal ou un polymère (PAI, PEI, PI, PES, PPS, PEK ou PEEK). La surface de l'article culinaire recouverte par ce matériau est comprise entre 30 % à 80 % et la dimension entre les gouttes déposées est comprise entre 2 µm à 50 µm. La surface de cette couche dure présente une rugosité avec un Ra de 2 µm à 12 µm, de préférence 4 µm à 8 µm.

Ce matériau est projeté par un procédé flamme Spray sous forme pulvérulente avec une granulométrie comprise de préférence entre 20 µm et 45 µm.

Il est nécessaire de préchauffer fortement le substrat métallique avant de procédé au dépôt des poudres par flamme spray au-dessus de 180°C.

Les couches fluorées sont ensuite déposées par spray coating une fois le dépôt refroidi à température ambiante. Un seul frittage à 430°C est ensuite réalisé.

Dans le brevet FR 2 871 038, il est mentionné l'utilisation d'une sous couche de PEEK, avec une résine PAI et des résines fluorées déposée sur un substrat métallique puis recouverte d'un revêtement antiadhésif en une ou plusieurs couches et sans présence de PEEK dans ces couches supérieures.

La sous couche est composée d'un mélange de PAI, de PEEK et de PTFE tels que le PTFE est compris entre 9 à 15 %/p et la résine PAI est comprise entre 4 à 5 %/p.

Dans tous les cas le taux de PEEK en matière sèche dans le film fluoré final est de l'ordre de 0,12 % à 1,1 %/p, de préférence de 0,12 % à 0,9 %/p.

La poudre de PEEK a une granulométrie D50 de 5 à 35 µm.

Dans tous les cas, la première couche de revêtement contient des résines fluorées.

Ce revêtement liquide est déposé par spray. Des couches supérieures de revêtements fluorés contenant

également un ou des primaires d'accroche sont ensuite déposées par spray. Le frittage de toutes ces couches est réalisé en une seule cuisson de 400 à 420°C.

L'inconvénient de cette méthode d'application est que le taux de résine PEEK dans la première couche est très faible et ne permet pas d'atteindre les performances mécaniques suffisantes pour avoir un revêtement anti-rayure.

Dans la demande WO 00/054896, il est mentionné l'utilisation d'une sous couche de PEEK sans résine fluorée constituée d'au-moins 50 % en poids de poudre de PEEK, ceci afin que la surface recouverte en PEEK soit comprise entre 60 % à 95 % de la surface de l'article.

Ce primaire qui contient au-moins 50 % de PEEK, peut contenir également un mélange avec d'autres résines thermostables pures ou en mélange tels que le polyphenylène sulfure (PPS), le polyetherimide (PEI), le polyimide (PI), le polyethercetone (PEK), le polyethersulfone (PES), le polyamideimide (PAI).

Elle peut aussi contenir des charges choisies parmi les oxydes métalliques : silice, mica, ou charges lamellaires. Elle ne comporte aucune résine fluorée.

La première cuisson est réalisée à une température élevée d'au-moins 260°C, de préférence supérieure ou égale à 340°C pour faire fondre le PEEK.

Le PEEK est sous forme de poudre dont la granulométrie est comprise entre 4 μm et 80 μm, avec un d50 de préférence de 20 μm. L'épaisseur de cette sous-couche est comprise entre 5 μm et 100 μm.

Ce revêtement liquide est déposé par spray. Des couches supérieures de revêtements fluorés voire de primaires avec des couches de finition fluorées sont ensuite déposés par spray. Le frittage de toutes ces couches est réalisé en une seconde cuisson pour fritter le revêtement fluoré, entre 400°C à 420°C.

Dans le brevet US 6,596,380 B1, il est mentionné un revêtement fluoré anti-rayures dont la première couche contient au-moins 50 % en poids de PEEK (de préférence entre 60 % et 95 %), en mélange avec une résine polymère thermostable telle que la PPS, le PEI, le PI, les PAI et leurs mélanges et des charges telles que les oxydes métalliques, la silice, les micas, et en absence de toute résine fluorée. Cette première couche a une épaisseur comprise entre 5 et 100 μm.

Le PEEK est une poudre de granulométrie de 4 μm à 80 μm avec un d50 de l'ordre de 20 μm.

Cependant, le procédé d'obtention d'un tel revêtement passe forcément par une double-cuisson/frittage entre 400 et 420°C.

Les résines silicones pures sont décrites comme anti-adhésives et résistantes à des températures supérieures à 220-230°C. En revanche, elles sont considérées comme peu adhérentes au substrat.

A l'inverse, les résines silicones-polyesters sont très répandues dans la moulerie car elles sont anti-adhésives tout en étant adhérentes au substrat et compatibles avec des procédés d'emboutissage. Néanmoins, elles se dégradent à des températures supérieures à 230°C. En effet, la plage de température d'usage des articles culinaires se situe entre 50 et 250°C et il n'est pas surprenant de monter à des températures de 300°C voire 350°C dans le cas d'articles avec des fonds induction. Leur utilisation n'est donc pas compatible avec les températures d'usage dans le domaine des articles culinaires.

La présente invention traite la problématique technique de l'amélioration de la résistance à la rayure et à l'écaillage des revêtements silicone, grâce à la réalisation d'une sous couche en contact avec le substrat métallique à base de mélanges de polymères thermoplastiques à propriétés thermo-mécaniques élevées. US 2022/073785 A1 décrit par exemple un élément de cuisson revêtu pour article culinaire ou appareil électrique de cuisson, comportant un substrat métallique revêtu sur au moins une face par au moins les couches suivantes et dans cet ordre à partir du substrat métallique:

- sous-couche d'accroche comprenant entre 20 % et 100 % en poids du poids total de la sous-couche d'un ou plusieurs polymère(s) (α) choisis dans le groupe constitué des polyaryléthercétones (PAEK) et d'un ou plusieurs polymère(s) choisis dans le groupe constitué des polyetherimides (PEI), des polyimides (PI), des polyamide imides (PAI) et des polybenzymidazole (PBI),
- une couche de finition constituée d'une ou plusieurs résine(s) silicone.

DEFINITIONS

Par le terme « couche », il faut comprendre au sens de la présente invention une couche continue ou discontinue. Une couche continue (ou appelée également couche monolithique) est un tout unique formant un aplat total recouvrant complètement la surface sur laquelle elle est posée. Une couche discontinue (ou couche non monolithique) peut comprendre plusieurs parties n'étant pas ainsi un tout unique.

On entend par « couche de base », « couche primaire », « couche d'accroche » ou « primaire d'accroche » toutes les couches de la première couche appliquée directement sur le support (il est préférable que cette couche soit bien adhérente au support et apporte toutes ses propriétés mécaniques au revêtement : dureté, résistance à la rayure) à la dernière couche avant la première couche de décor.

On entend par « couche de finition » ou « finish » une couche de surface continue et transparente, cette couche laissant une visibilité parfaite de la couche de décor tout en la protégeant d'agressions mécaniques et conférant au revêtement ses propriétés antiadhérentes. De préférence, la dernière couche de finition est destinée à être en contact avec les aliments.

On entend par « décor » ou « couche de décor » une ou plusieurs couches continues ou discontinues comprenant une composition pigmentaire. Le décor peut se présenter sous la forme d'un ou plusieurs motifs, d'une ou plusieurs couleurs. Un décor est visible pour l'utilisateur distinctement à l'œil nu et à distance classique d'utilisation de l'article ménager.

On entend par « couches chevauchantes » des couches superposées partiellement ou complètement superposées. Ces couches peuvent se présenter sous forme de motifs partiellement chevauchants, par exemple des disques concentriques.

On entend par « couches adjacentes » des couches non superposées. Ces couches peuvent se présenter sous forme de motifs identiques ou différents non superposés, de préférence répartis uniformément.

On entend par « composition pigmentaire de référence de température » une composition comprenant un pigment qui à une température donnée, permet d'indiquer à l'utilisateur que la température d'utilisation optimale est atteinte. Cette indication se fait par comparaison des couleurs de la composition pigmentaire thermochrome et de la composition pigmentaire de référence de température. Soit la température d'utilisation optimale est atteinte lorsque les couleurs sont identiques, soit la température d'utilisation optimale est atteinte lorsque les couleurs sont visuellement très différentes.

La « composition pigmentaire de référence de température » peut comprendre un pigment qui présente :

- la même couleur que la composition pigmentaire thermochrome, à la température d'utilisation optimale,

    * soit parce que ce pigment présente à température ambiante la même couleur que la composition pigmentaire thermochrome à la température d'utilisation optimale, et ne change pas de couleur avec la température,

    * soit parce que ce pigment présente à température ambiante une couleur différente de celle de la composition pigmentaire thermochrome qui évolue jusqu'à la même couleur que la composition pigmentaire thermochrome à la température d'utilisation optimale,

- une couleur très différente de celle de la composition pigmentaire thermochrome à la température d'utilisation optimale, que ce pigment change de couleur ou pas avec l'évolution de la température.

La température d'utilisation optimale peut être atteinte lorsque la couleur de la composition pigmentaire de référence de température correspond à une couleur indiquée dans le guide d'utilisation de l'article ménager comprenant le revêtement de l'invention ou à une couleur indiquée sur une échelle de couleurs fournie à l'utilisateur avec ledit article.

La composition pigmentaire de référence de température est thermochrome ou thermostable.

La composition pigmentaire de référence de température peut être par exemple une composition pigmentaire de référence de température de cuisson ou d'indication de risque de surchauffe.

La présente invention présente au moins l'un des avantages suivants :

- le revêtement selon l'invention présente une fonctionnalité thermochrome avec une visibilité marquée, un changement de couleur contrasté sur une plage de températures ciblée et centrée, par exemple autour des températures de cuisson des aliments pour un appareil culinaire ;
- le revêtement selon l'invention peut fournir un bon contrôle de la température lors de la cuisson des aliments, ce qui est nécessaire pour des raisons sanitaires et gustatives, mais aussi de sécurité et pour limiter les surchauffes ponctuelles fragilisant le revêtement ;
- la composition pigmentaire thermochrome présente une réversibilité de ses propriétés thermochromes c'est-à-dire qu'après un changement de couleur sous l'action de la chaleur le composé revient à son état initial, et à sa couleur initiale, lorsque la température diminue ; ce cycle de changement de couleur (réversibilité) peut être répété à l'infini ;
- le revêtement selon l'invention présente une stabilité thermique importante lors des élévations de températures, il est stable jusqu'à environ 450°C.

Par l'expression « semi-conducteur thermochrome », il faut comprendre au sens de la présente invention, un composé minéral ou organique, qui présente un changement réversible de coloration lors d'une élévation de température. Le caractère thermochrome progressif et réversible de ces composés semi-conducteurs est lié à la diminution de la largeur de la bande interdite du semi-conducteur à cause de la dilatation du matériau. En effet, la périodicité du réseau d'anions et de cations conduit au rassemblement des niveaux d'énergie en bandes d'énergie. La bande d'énergie remplie

de plus haute énergie est appelée bande de valence et la bande d'énergie vide de plus basse énergie est appelée bande de conduction. Entre ces deux bandes, il existe une bande interdite appelée gap. La couleur d'un matériau semi-conducteur peut provenir de la présence d'un transfert de charge qui correspond au passage d'un électron soit d'une bande de valence à une bande conduction sur un même atome, soit communément de l'orbitale d'un anion vers l'orbitale d'un cation (absorption photonique interatomique).

Dans les domaines d'applications envisagées pour la présente invention, les conditions optimales sont atteintes lorsque le revêtement atteint une température adaptée à la cuisson des aliments, de préférence comprise entre 100 et 250°C.

Par « pigment ou composition pigmentaire thermochrome », il faut comprendre au sens de la présente invention, un pigment ou une composition pigmentaire qui change de couleur en fonction de la température dans un domaine de température donné, ce changement étant réversible. Ce changement de couleur est visible par l'utilisateur à l'œil nu et à distance d'utilisation classique.

On entend par « pigment thermostable » un pigment qui ne présente pas de changement de couleur lorsqu'il est soumis à une élévation de température dans un domaine de température donné ou qui présente un changement de teinte lorsqu'il est soumis à une élévation de température dans un domaine de température donné tellement faible qu'il n'est pas visible par l'utilisateur à l'œil nu et à distance d'utilisation classique.

De préférence, les pigments thermostables présentent un écart de couleur ΔE* entre 25°C et 200°C inférieur à 10, ΔE* étant défini par la formule CIE1976 dans l'espace colorimétrique CIELAB :

$$\Delta E^* = \sqrt{(L_2{}^* - L_1{}^*)^2 + (a_2{}^* - a_1{}^*)^2 + (b_2{}^* - b_1{}^*)^2}$$

$L_1^*$, $a_1^*$ et $b_1^*$ caractérisant les valeurs L*a*b dudit composé à température ambiante
$L_2^*$, $a_2^*$ et $b_2^*$ caractérisant les valeurs L*a*b dudit composé à 200°C.

Par « les couleurs sont identiques » on entend indistingables par l'utilisateur à l'œil nu et à distance d'utilisation classique.

Par l'expression « article culinaire », il faut comprendre au sens de la présente invention un objet destiné à cuisiner. Pour ce faire, il est destiné à recevoir un traitement thermique.

Par l'expression « objet destiné à recevoir un traitement thermique », il faut comprendre au sens de la présente invention un objet qui sera chauffé par un système extérieur de chauffage tels que des poêles, des casseroles, des sauteuses, des woks, des grilles de barbecues et qui est apte à transmettre l'énergie calorifique apportée par ce système extérieur de chauffage à un matériau ou aliment au contact dudit objet.

Par l'expression « appareil électrique de cuisson », il faut comprendre au sens de la présente invention un objet chauffant possédant son propre système de chauffage tels que crêpière électrique, appareil électrique à raclette, appareil électrique à fondue, grill électrique, plancha électrique, cuiseur électrique, machine à pain, appareil électrique de cuisson sous pression.

On entend par « revêtement à base de résine silicone » un revêtement qui comprend une ou plusieurs résine(s) silicone dans une ou plusieurs de ses couches.

On entend par « revêtement », l'ensemble des couches adhérent au substrat métallique et recouvrant ce substrat. Le revêtement selon l'invention obtenu est avantageusement solide, on entend par « solide » la caractéristique d'un matériau cohésif insoluble dans l'eau, dans les solvants usuels, dans les composants alimentaires tels que les mélanges aqueux ou gras, même si le matériau peut présenter une grande dureté ou une grande souplesse tel un élastomère.

Dans la présente invention, les % en poids sont exprimés en poids sec, c'est-à-dire sans solvant.

## RESUME DE L'INVENTION

Un premier objet de l'invention concerne un élément de cuisson revêtu selon la revendication 1.

Un autre objet de l'invention concerne un procédé de fabrication d'un élément de cuisson revêtu selon la revendication 11.

Un autre objet de l'invention concerne un article culinaire selon la revendication 13.

Un autre objet de l'invention concerne un appareil électrique de cuisson selon la revendication 15.

## FIGURES

[Fig.1] : schéma d'élément de cuisson selon l'invention avec couche (3b) est continue et recouvre la totalité de la couche (3a)
[Fig.2] : schéma d'élément de cuisson selon l'invention avec la couche (3b) ne recouvre pas la totalité de la couche (3a) et forme un décor
[Fig.3] : schéma d'élément de cuisson selon l'invention avec la couche (3b) se compose de deux décors (i) et (j)
[Fig.4] : schéma de répartition des motifs. 4A = motifs adjacents non chevauchants. 4B = motifs partiellement chevauchants. 4C = motifs chevauchants.
[Fig.5] : schéma d'article culinaire selon l'invention
[Fig.6] : schéma d'appareil électrique de cuisson selon l'invention

## DESCRIPTION DETAILLEE

Un premier objet de l'invention concerne un élément de cuisson revêtu (1) pour article culinaire ou appareil électrique de cuisson, comportant un substrat métallique (2) revêtu sur au moins une face (2a) par au moins les couches suivantes et dans cet ordre à partir du substrat métallique (2) :

(3a) sous-couche d'accroche comprenant entre 20 % et 100 % en poids du poids total de la sous-couche d'un ou plusieurs polymère(s) ($\alpha$) choisis dans le groupe constitué des polyaryléthercétones (PAEK) et d'un ou plusieurs polymère(s) choisis dans le groupe constitué des polyetherimides (PEI), des polyimides (PI), des polyamide imides (PAI) et des polybenzymidazole (PBI), avec un ratio en poids PAEK:(PEI+PI+PAI+PBI) compris entre 1:1 et 15:1,
(3b) éventuellement, une ou plusieurs couche(s) intermédiaire(s), de préférence deux, constituée(s) d'un ou plusieurs agent(s) colorant(s) et éventuellement

- d'une ou plusieurs résine(s) silicone, et/ou
- d'un ou plusieurs polymère(s) thermoplastique(s) et/ou,
- d'une ou plusieurs charge(s), et/ou
- d'un ou plusieurs additif(s)

(3c) une couche de finition constituée d'une ou plusieurs résine(s) silicone en une proportion supérieure ou égale à 20% en poids par rapport au poids total de la couche (3c) et éventuellement

- d'un ou plusieurs polymère(s) thermoplastique(s), et/ou
- d'une ou plusieurs charge(s), et/ou
- d'un ou plusieurs additif(s), et/ou
- de paillettes.

Avantageusement, les couches (3a), éventuellement (3b) et (3c) forment un revêtement (3) qui revêt le substrat métallique (2). Ce revêtement (3) présente des propriétés antiadhésives et forme un revêtement antiadhésif.
Avantageusement, la couche (3a) est en contact par une de ses faces avec le substrat métallique (2) par sa face (2a).
L'au moins une face revêtue (2a) du substrat métallique est donc une face de cuisson.
Autrement dit, le revêtement de l'élément de cuisson (1) est destiné à être en contact avec des aliments.
Le revêtement de l'élément de cuisson (1) ne comprend pas de polymère fluoré, aussi appelé fluoropolymère. En d'autres termes, ledit revêtement est ou est dépourvu de polymère fluoré.
Le revêtement de l'élément de cuisson (1) est destiné à être en contact avec les aliments.
Avantageusement, la couche de finition (3c) est en contact par une de ses faces avec des aliments et forme ainsi une face de cuisson (5).
Avantageusement, l'épaisseur de la couche (3b) est comprise entre 1 $\mu$m et 100 $\mu$m, de préférence entre 2 $\mu$m et 30 $\mu$m, de manière particulièrement préférée entre 3 $\mu$m et 10 $\mu$m.
Avantageusement, l'épaisseur de la couche (3c) est comprise entre 0,05 $\mu$m et 100 $\mu$m, de préférence entre 0,08 $\mu$m et 20 $\mu$m, de manière particulièrement préférée entre 0,1 $\mu$m et 10 $\mu$m.
Selon un mode de réalisation, l'épaisseur de la couche (3c) est comprise entre 0,1 $\mu$m et 2 microns, de préférence entre 0,2 $\mu$m et 1,5 $\mu$m. Dans un mode particulier de réalisation, l'épaisseur de la couche (3c) est de 100 nm +/- 5nm.
Selon un autre mode de réalisation, l'épaisseur de la couche (3c) est comprise entre 10 $\mu$m et 100 $\mu$m, de préférence entre 20 $\mu$m et 85 $\mu$m, de manière particulièrement préférée entre 30 $\mu$m et 70 $\mu$m.
Le revêtement de l'élément de cuisson (1) peut comprendre une ou plusieurs couche(s) (3ab), facultatives s'intercalant entre la/les couche(s) (3a) et la/les couche(s) (3b) ou entre la/les couche(s) (3a) et la/les couche(s) (3c)

constituée(s) d'une ou plusieurs résine(s) silicone et éventuellement

- d'un ou plusieurs polymère(s) thermoplastique(s), et/ou
- d'une ou plusieurs charge(s), et/ou
- d'un ou plusieurs additif(s),

Avantageusement, l'épaisseur de la/des couche(s) (3ab) est comprise entre 0,05 μm et 100 μm, de préférence entre 0,08 μm et 20 μm, de manière particulièrement préférée entre 0,1 μm et 10 μm.
Avantageusement, la sous-couche d'accroche (3a) comprend un ou plusieurs polymères (B) choisi(s) dans le groupe constitué des polysulfures de phénylène (PPS) et des polyethersulfones (PES) de préférence en une quantité d'au moins 20%, de préférence au moins 25%, en poids du poids total de la sous-couche d'un ou plusieurs polymères choisi(s) dans le groupe constitué des polysulfures de phénylène (PPS) et des polyethersulfones (PES). Avantageusement, la sous-couche d'accroche (3a) comprend moins de 40 %, de préférence moins de 30 %, en poids du poids total de la sous-couche de charges, de préférence entre 5 et 25 % en poids.
Avantageusement, la sous-couche d'accroche (3a) comprend une ou plusieurs résine(s) acrylique(s). La ou les résine(s) acrylique(s) est/sont avantageusement choisie(s) dans le groupe constitué de : polymères issus d'une polymérisation en émulsion de différents monomères avec d'autres monomères à base d'acryliques.
Avantageusement, la sous-couche d'accroche (3a) comprend un ou plusieurs agent(s) colorant(s).
Avantageusement, le ou les agent(s) colorant(s) de la sous-couche d'accroche (3a) représentent moins de 30 %, de préférence moins de 20 %, en poids du poids total de la sous-couche.
Avantageusement, le ou les polyaryléthercétones (PAEK) est(sont) choisi(s) dans le groupe constitué de : polyethercétones (PEK), polyetherethercetone (PEEK), polyethercétonecétones (PEKK), polyetherethercétonecétones (PEEKK) et polyethercétoneethercétonecétones (PEKEKK).
Avantageusement, le ou les polymère(s) (α) est(sont) choisi(s) dans le groupe constitué des polyetherethercétones (PEEK) et des polyamide imides (PAI).
Avantageusement, lorsque les polymères (α) représentent de 20 à 40 % de la sous-couche, le ratio en poids PAEK:(PEI+PI+PAI+PBI) est compris entre 6:1 et 12:1.
Avantageusement, lorsque les polymères (α) représentent de 40 à 80 % de la sous-couche, le ratio en poids PAEK:(PEI+PI+PAI+PBI) est compris entre 12:1 et 15:1.
Avantageusement, les polymères (α) représentent 25 à 40 % en poids du poids total de la sous-couche, de préférence de 25 à 35 %.
Le ratio en poids entre les polymères (α) et les polymères (B) est avantageusement compris entre 2:5 et 2:3, de préférence entre 1:2 et 1:3.
Avantageusement, le ou les polyaryléthercétones (PAEK) est(sont) choisi(s) dans le groupe constitué de : polyethercétones (PEK), polyetherethercetone (PEEK), polyethercétonecétones (PEKK), polyetherethercétonecétones (PEEKK) et polyethercétoneethercétonecétones (PEKEKK), de manière particulièrement préférée est(sont) des PEEK.
Avantageusement, le ou les polymère(s) (α) est(sont) choisi(s) dans le groupe constitué des polyaryléthercétones (PAEK) et des polyamide imides (PAI) et de leurs mélanges. De manière particulièrement préférée, la partie (α) est un mélange de polymères PAEK et PAI. Avantageusement, le ou les polymère(s) (α) est(sont) choisi(s) dans le groupe constitué des polyetherethercétones (PEEK) et des polyamide imides (PAI) et de leurs mélanges. De manière particulièrement préférée, la partie (α) est un mélange de polymères PEEK et PAI.
Avantageusement, le ou les polymère(s) (B) est(sont) une(des) polyethersulfone(s) (PES).
Dans un mode de réalisation préféré, les parties (α) et (β) sont un mélange constitué des polymères PEEK, PAI et PES.
Avantageusement, la sous-couche d'accroche (3a) peut comprendre en outre un ou plusieurs solvants, de préférence aprotiques polaires, de préférence non étiquetés, par exemple N-formylmorpholine (NFM), N-Méthyl Imidazole (NMI), N-ButylPyrrolidone (NBP), diméthylsulfoxyde (DMSO), ou alcooliques, par exemple Propylène Glycol (PPG), Diethyleneglycol.
Avantageusement, la sous-couche d'accroche (3a) peut comprendre un ou plusieurs tensioactifs.
Avantageusement, la sous-couche d'accroche (3a) peut comprendre en outre un ou plusieurs agents anti-mousses.
Dans un mode de réalisation préféré, la sous-couche d'accroche (3a) est un mélange constitué de PEEK, PAI, PES et éventuellement des charges, des résines acryliques et des agents colorants.
L'épaisseur de la sous-couche d'accroche (3a) est avantageusement comprise entre 10 et 100 μm, de préférence entre 20 et 80 μm, préférentiellement entre 30 et 60 μm.

*SUBSTRAT METALLIQUE*

Avantageusement, ledit substrat métallique (2), également appelé support, est un substrat en aluminium, en acier inoxydable, en fonte de fer ou d'aluminium, en fer, en titane ou en cuivre.

Par aluminium s'entend d'un métal constitué à 100 % d'aluminium ou d'un alliage d'aluminium.

Avantageusement, le substrat métallique (2) est un substrat en aluminium, en acier inoxydable ou un substrat métallique multicouches. Le substrat métallique (2) peut être un substrat bicouches ou tri-couches, ces multicouches pouvant être obtenues par exemple par colaminage, par diffusion à chaud sous charge (solid state bonding) ou par frappe (impact bonding) à chaud ou à froid.

De préférence, le substrat métallique (2) comprend une alternance de couches en métal et/ou en alliage métallique.

Selon un mode de réalisation, le substrat métallique (2) est un substrat en alliage d'aluminium, en acier inoxydable ou un substrat métallique multicouches dont la face (2a) est en alliage d'aluminium ou en acier inoxydable.

De préférence, le substrat métallique (2) est un substrat en aluminium. Avantageusement, l'épaisseur du substrat métallique (2) est comprise entre 0,5 mm et 10 mm.

Avantageusement, la face (2a) du substrat métallique (2) a subi préalablement un traitement de surface permettant d'améliorer l'adhésion du revêtement audit substrat.

Selon un mode de réalisation, la surface de la face (2a) du substrat métallique (2) a subi un traitement de surface, le dit traitement de surface étant une attaque chimique, un brossage, une hydratation, un sablage, un grenaillage, un traitement physicochimique de type plasma ou corona ou laser, une activation chimique ou une combinaison de ces différentes techniques.

Avantageusement, la face du substrat (2a) sur laquelle va être appliqué le revêtement (3) peut être traitée de façon à augmenter sa surface spécifique ; pour un substrat en aluminium, ce traitement peut être fait par anodisation (création d'une structure tubulaire d'alumine), par attaque chimique, par sablage, par brossage, par grenaillage ou par ajout de matière par le biais d'une technologie telle que la projection thermique (flamme, plasma ou arc spray). Les autres substrats métalliques peuvent également être polis, sablés, brossés, microbillés ou recevoir un ajout de matière par le biais d'une technologie telle que la projection thermique (flamme, plasma ou arc spray).

A titre de substrats métalliques utilisables, on peut avantageusement citer les substrats en aluminium anodisé ou non, éventuellement poli, brossé, sablé, grenaillé ou microbillé, les substrats en alliage d'aluminium anodisé ou non, éventuellement poli, brossé, sablé ou microbillé, les substrats en acier éventuellement poli, brossé, sablé, grenaillé ou microbillé, les substrats en acier inoxydable éventuellement poli, brossé, sablé ou microbillé, les substrats en fonte d'acier, d'aluminium ou de fer, les substrats en cuivre éventuellement martelé ou poli.

Avantageusement, le substrat peut être choisi parmi les substrats comprenant les couches acier inoxydable ferritique/aluminium/acier inoxydable austénitique, les substrats comprenant les couches acier inoxydable/aluminium/-cuivre/aluminium/acier inoxydable austénitique, les calottes en aluminium de fonderie, en aluminium ou en alliages d'aluminium doublées d'un fond extérieur en acier inoxydable, les substrats colaminés métalliques, par exemples les substrats colaminés bicouches comprenant une couche en acier inoxydable (par exemple destinée à constituer la face intérieure de l'article) et une couche en aluminium ou en alliage d'aluminium, anodisé ou non (par exemple destinée à constituer la face extérieure de l'article).

Avantageusement, la rugosité arithmétique moyenne Ra de la surface de la face (2a) du substrat métallique (2) est supérieure ou égale à 1 $\mu$m.

La rugosité arithmétique moyenne Ra est mesurée au moyen d'un rugosimètre selon la norme ISO 4287. Ra représente la moyenne arithmétique des écarts à la moyenne. La topographie de surface peut être étudiée notamment avec un profilomètre avec palpeur muni d'un stylet fin équipé d'une pointe en diamant, ou encore avec un appareil de métrologie optique type Altisurf®, dans lequel un capteur confocal chromatique permet une mesure sans contact. L'étude de cette topographie de surface permet de définir la rugosité arithmétique moyenne Ra.

*RESINES SILICONE*

Dans le texte de la description, l'expression « résine silicone » est utilisée indifféremment pour mentionner le silicone avant sa réticulation ou après sa réticulation. Dans le texte de la description, l'expression « silicone » désigne un matériau organopolysiloxane. La réticulation est l'étape qui permet de transformer le silicone en un matériau insoluble, par exemple par polyaddition, polycondensation ou déshydrogénation. La réticulation est réalisée à partir de précurseurs qui sont généralement des huiles ou résines silicones, qui réticulent pour obtenir un réseau tridimensionnel formant un matériau appelé résine silicone, dans la description.

Cette réticulation, peut se faire par activation thermique, ou activation chimique à l'aide d'un catalyseur, comme par exemple le platine.

Les résines silicone peuvent être obtenues à partir de précurseurs, avantageusement solubles dans un solvant

ou en émulsion dans l'eau, tel que des huiles ou des résines réticulables, notamment choisis parmi : un hydrure de silicone, une résine huile silicone comprenant au moins un groupe vinyle (-$CH=CH_2$), une résine silicone ou silicone-polyester (copolymère) comprenant au moins un groupe alkoxy, par exemple méthoxy ou éthoxy, et/ou une résine silicone ou silicone-polyester (copolymère) comprenant au moins un groupe alkoxy, en particulier éthoxy, ou un groupe hydroxy et leurs mélanges. Ces précurseurs ont la capacité de réticuler afin d'obtenir une résine silicone qui se caractérise par son insolubilité et sa forme sensiblement solide.

Avantageusement, ces précurseurs sont polymériques ou oligomériques, soit sous forme d'huiles silicones de degré de branchement variable, soit sous forme de résines silicones de degré de pré-reticulation variable ou de copolymères de résines silicones telles que les résines silicone-polyester, silicone-alkydes, silicone-polyuréthanes, silicone-époxy, soit sous forme de mélange d'huiles silicones, de résines silicones et de copolymères de résines silicones. Les atomes silicium peuvent être substitués par des groupements alkyl (en particulier methyl) ou aryl (en particulier phényl) ou leurs mélanges. Les huiles ou résines comportent de préférence un ou plusieurs (2, 3 ou plus) groupements fonctionnels hydroxy ou alkoxy (en particulier methoxy, éthoxy, butoxy) comme substituants d'atomes de silicium.

Avantageusement, la ou les résine(s) silicone, obtenue(s) après réticulation de leurs précurseurs, c'est-à-dire réticulée(s), est/sont choisie(s) dans le groupe constitué de résines méthyl silicones et/ou phényl silicones et/ou méthyl-phényl-silicones, résine méthyl silicone-polyester (copolymères), résine phényl silicone-polyester (copolymères), résine méthyl-phényl silicones-polyester (copolymères), résine silicone-alkyde (copolymères), résine silicone modifiée et leurs mélanges.

Avantageusement, la ou les résine(s) silicone est/sont choisie(s) dans le groupe constitué de résines méthyl silicones et/ou phényl silicones et/ou méthyl-phényl-silicones, résine méthyl silicone-polyester (copolymères), résine phényl silicone-polyester (copolymères),_résine méthyl-phényl silicones-polyester (copolymères), résine silicone-alkyde (copolymères), résine silicone modifiée et leurs mélanges.

Les résines silicone peuvent être obtenues à partir de précurseurs, notamment choisis parmi : un hydrure de silicone, une résine silicone comprenant au moins un groupe vinyle (-$CH=CH_2$), une résine silicone-polyester (copolymère) comprenant au moins un groupe méthoxy, et/ou une résine silicone-polyester (copolymère) comprenant au moins un groupe éthoxy, et leurs mélanges.

La résine silicone de la couche unique (3) forme un réseau qui peut-être constitué d'une combinaison de 4 unités organosiloxanes simples dénommées M, D, T et Q en fonction du degré de substitution par l'oxygène de l'atome de silicium, telles que décrites dans le tableau suivant, où R est un substituant organique décrit dans la suite.

| Structure | Degré de substitution par l'oxygéne | Symbole |
|---|---|---|
| $R_3Si$-O- | 1 | M |
| 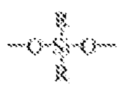 | 2 | D |
| 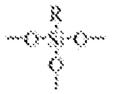 | 3 | T |
| 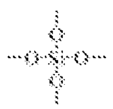 | 4 | Q |

Le matériau ou polymère organopolysiloxane est obtenu par réticulation à partir de précurseurs qui peuvent être monomériques ou polymériques, ou de manière intermédiaire qui peuvent être oligomériques. Le polymère organopolysiloxane peut être obtenu aussi à partir d'un mélange de ces différentes sortes de précurseurs. Lorsque le réseau contient un nombre plus élevé d'unités T et Q, que D, la densité de réticulation est plus élevée. La répartition entre les unités M, D, T et Q dépend de la structure chimique des précurseurs, en particulier de cette répartition M, D, T, Q au sein des précurseurs.

Les précurseurs polymériques sont des organopolysiloxanes. Ces macromolécules sont formées d'unités M, D, T, et/ou Q comme décrites dans le tableau, où R est indépendamment un groupement alkyl, en particulier méthyl, ou aryl, en particulier phényl, différentes natures de R pouvant être présentes sur la même macromolécule.

Les organopolysiloxanes peuvent être soit linéaires ou peu branchés (majorité de groupes D), soit branchés ou très branchés (majorité de groupes T et Q). Les organopolysiloxanes linéaires ou peu branchés sont généralement liquides, plus ou moins visqueux à température ambiante, et sont appelés huiles silicones. Les organopolysiloxanes

branchés ou très branchés (préréticulés) constituent un réseau à l'échelle de la macromolécule individuelle et sont appelés résines silicones. A température ambiante, les résines sont sensiblement sous forme solide, ou sous forme liquide à condition en particulier d'avoir une masse moléculaire assez basse, sous forme de solution dans un solvant ou sous forme d'émulsion aqueuse. Elles peuvent être copolymérisées avec des polymères ou oligomères organiques ne comportant pas de silicium, choisis en particulier parmi les polyesters, les acryliques, les alkydes, les polyuréthanes, les résines époxy.

Lorsque la réticulation est une hydrolyse-polycondensation : elle s'effectue grâce aux fonctions réactives hydroxy ou alkoxy, en particulier méthoxy, éthoxy ou butoxy, présentes sur l'organopolysiloxane.

Lorsque la réticulation est une polyaddition (ou hydrosilylation) : elle s'effectue par réaction entre les fonctions réactives vinyles (-CH=CH2) présentes sur l'un des organopolysiloxanes et les fonctions réactives hydrure de silyle (Si-H) présentes sur l'autre organopolysiloxane mélangé au premier.

Toutes ces fonctions réactives sont présentes sur chaque organopolysiloxane au nombre d'au moins une et peuvent être présentes au nombre de 2, 3, ou plus ... autant que le permet la structure moléculaire. Les huiles silicones comportant au moins une fonction réactive sont appelées « huiles réactives ». Les fonctions réactives peuvent se trouver soit en bout de chaîne macromoléculaire (terminaison), soit réparties sur la chaîne.

Les résines silicones-polyester en particulier ont des ratios massique silicone/polyester par exemple 90/10, 80/20, 70/30, 60/40, 50/50, 40/50, 30/70, 20/80, 10/90, avantageusement entre 80/20 et 50/50.

Les huiles silicones PDMS linéaires, pures ou pré-émulsionnées dans l'eau, sont caractérisées en premier lieu par leur masse moléculaire, directement fonction croissante de la viscosité de l'huile pure. Elles sont ensuite caractérisées par la présence ou non de fonctions réactives, par exemple hydroxyles sur les atomes silicium (silanol), leur nombre et leur emplacement sur la chaîne moléculaire. Par exemple, des huiles réactives avec des viscosité comprises entre 50 et 20 000 mPa.s, et en particulier entre 300 et 5 000 mPa.s, peuvent être utilisées, possédant au moins une fonction réactive, préférentiellement au moins 2, qui peuvent être placées en bout de chaîne (positions □, □).

Les précurseurs polymériques réagissant par polyaddition peuvent inclure par exemple le polymethylhydrosiloxane, le vinylméthylsiloxane, le polydiméthylsiloxane (PDMS) terminé vinyl en particulier linéaire, les copolymères diphénylsiloxane-diméthylsiloxane terminés vinyl, les polydiméthylsiloxanes terminés hydrure, les polyphénylméthylsiloxanes terminés hydrure, le vinylméthylsiloxane cyclique, la résine vinyl-MQ, le polyméthylhydrosiloxane terminé trimethylsilyl, copolymère de méthylhydrosiloxane et diméthylsiloxane terminé triméthylsiloxane, l'hydrure de résine MQ, et similaires, ainsi que leurs combinaisons.

Les précurseurs polymériques réagissant par hydrolyse-polycondensation, qu'ils soient des résines silicones ou des huiles silicones, peuvent inclure par exemple des poly(méthylsilsesquioxanes), poly(propylsilsesquioxanes), poly(phénylsilsesquioxanes), le polydimethylsiloxane (PDMS), le polydimethylsiloxane (PDMS), terminé trimethylsilyl, le polydimethylsiloxane (PDMS) terminé hydroxyl, le polydimethylsiloxane (PDMS) terminé silanol, le polyphénylsiloxane (PDMS) terminé silanol, le copolymère de diphénylsiloxane-diméthylsiloxane terminé silanol, des poly(2-acétoxyéthylsilsesquioxanes), des alkoxy-silanes organo-modifies et leurs oligomères, et toutes macromolécules similaires ainsi que leurs mélanges.

Le matériau ou polymère organopolysiloxane peut aussi être obtenu par la réticulation d'un mélange d'un ou plusieurs précurseurs monomériques et d'un ou plusieurs précurseurs polymériques tels que décrits ci-dessus, ainsi que d'un ou plusieurs précurseurs oligomériques qui peuvent être linéaires, branchés ou cycliques. Ces précurseurs oligomériques ont une masse moléculaire plus faible que les précurseurs polymériques. Des précurseurs polymériques et/ou oligomériques comportant un nombre de fonctions réactives telles que décrites plus haut supérieur à 2, avantageusement bien supérieur à 2, peuvent être ajoutés au mélange comme « co-liant » afin de favoriser une densité de réticulation élevée du polymère organopolysiloxane finalement obtenu.

Les précurseurs monomériques, oligomériques et/ou polymériques, en particulier les résines silicones, copolymérisées ou non avec un polymère organique, jouent le rôle de liant polymérique en vue d'obtenir le polymère organopolysiloxane solide combiné aux thermoplastiques de chaque couche.

Les précurseurs organopolysiloxanes de type huile silicone peuvent être considérés comme des additifs s'ils sont ajoutés en petite quantité (en générale entre 0,1 et 5% en sec) dans l'ensemble de la formule d'une couche, indépendamment des autres composants pour la formation du polymère organopolysiloxane solide.

La réticulation peut nécessiter un catalyseur :

- Dans le cas de la réticulation d'organopolysiloxanes par hydrolyse-polycondensation, la formule peut inclure un catalyseur métallique, comme par exemple des complexes métalliques à base de platine, d'étain, de zinc, de zirconium et de cerium, en particulier les complexes platine-cyclovinylméthyl-silxane, l'éthylhexanoate d'étain, l'éthylhexanoate de zinc, l'éthylhexanoate de zirconium, l'éthylhexanoate de cérium, et le dibutyl laurate d'étain.
- Dans le cas de la réticulation d'organopolysiloxanes par hydrosylilation, l'ajout d'un catalyseur peut être nécessaire : ce peut être par exemple le platine ou un catalyseur adapté à base de platine tel que le catalyseur de Karstedt ou le catalyseur d'Ashbys.

Un agent de réticulation, porteur par exemple de liaisons Si-H peut être présent.

Selon un mode de réalisation, la proportion de résine silicone dans la couche (3b) est supérieure ou égale à 20 % en poids par rapport au poids total respectivement de la couche (3b).

Selon un autre mode de réalisation, la proportion de résine silicone dans la couche (3b) est supérieure ou égale à 40 % en poids par rapport au poids total respectivement de la couche (3b).

Selon encore un autre mode de réalisation, la proportion de résine silicone dans la couche (3b) est supérieure ou égale à 50 % en poids par rapport au poids total respectivement de la couche (3b).

La proportion de résine silicone dans la couche (3c) est supérieure ou égale à 20 % en poids par rapport au poids total respectivement de la couche (3c).

Selon un autre mode de réalisation, la proportion de résine silicone dans la couche (3c) est supérieure ou égale à 40 % en poids par rapport au poids total respectivement de la couche (3c).

Selon encore un autre mode de réalisation, la proportion de résine silicone dans la couche (3c) est supérieure ou égale à 50 % en poids par rapport au poids total respectivement de la couche (3c).

Selon un mode de réalisation, la proportion de résine silicone dans la/les couche(s) (3ab) est supérieure ou égale à 20 % en poids par rapport au poids total respectivement de la couche (3ab).

Selon un autre mode de réalisation, la proportion de résine silicone dans la/les couche(s) (3ab) est supérieure ou égale à 40 % en poids par rapport au poids total respectivement de la couche (3ab).

Selon encore un autre mode de réalisation, la proportion de résine silicone dans la/les couche(s) (3ab) est supérieure ou égale à 50 % en poids par rapport au poids total respectivement de la couche (3ab).

*POLYMERES THERMOPLASTIQUES*

Avantageusement, le ou les polymère(s) thermoplastique(s) est/sont choisi(s) dans le groupe constitué de polyethersulfone (PES), polyphenylene ether sulfone (PPSU), polyamideimide (PAI), polyimide (PI), poly(phenylene oxyde) (PPO), poly(arylene sulfure) (PAS), polyetherimide (PEI), et des polybenzymidazole (PBI), polymères à cristaux liquides (LCP), sulfure de polyphenylene (PPS), polyarylether cétone (PAEK) dont polyether cétone (PEK), polyether ether cétone (PEEK), polyether cétone cétone (PEKK), polyether ether cétone cétone (PEEKK), polyether cétone ether cétone cétone (PEKEKK) et leurs mélanges.

*Polymères thermoplastiques hétérocycliques*

A titre de polymères thermoplastiques hétérocycliques, il est cité à titre d'exemple convenant les polyetherimides (PEI), des polyimides (PI), des polyamideimides (PAI) et des polybenzymidazole (PBI), ou leurs mélanges.

*PAEK*

Avantageusement, la ou les polyaryléthercétone(s) (PAEK) est(sont) choisie(s) dans le groupe constitué de : polyethercétones (PEK), polyetherethercétone (PEEK), polyethercétonecétones (PEKK), polyetherethercétonecétones (PEEKK) et polyethercétoneethercétonecétones (PEKEKK), de manière particulièrement préférée est(sont) des PEEK.

Avantageusement, la nature du ou des polymère(s) thermoplastique(s) dans les couches (3b) et (3c) peut être identique ou différente.

Avantageusement, la couche (3b) comprend un ou plusieurs polymère(s) thermoplastique(s), de préférence en une proportion en poids de ladite couche inférieure à 30 %, de préférence à 20 %.

Avantageusement, la couche (3c) comprend un ou plusieurs polymère(s) thermoplastique(s), de préférence en une proportion en poids de ladite couche inférieure à 50 %, de préférence à 40 %.

Avantageusement, la/les couche(s) (3ab) comprend/comprennent un ou plusieurs polymère(s) thermoplastique(s), de préférence en une proportion en poids de ladite couche inférieure à 50 %, de préférence à 40 %.

Selon un mode de réalisation, la couche (3b) et la couche (3c) comprennent un ou plusieurs polymère(s) thermoplastique(s), la proportion de polymère(s) thermoplastique(s) dans la couche (3c) étant préférentiellement supérieure à la proportion de polymère(s) thermoplastique(s) dans la couche (3b).

Selon un autre mode de réalisation, la couche (3b) et la couche (3c) comprennent un ou plusieurs polymère(s) thermoplastique(s), la proportion de polymère(s) thermoplastique(s) dans la couche (3b) étant supérieure à la proportion de polymère(s) thermoplastique(s) dans la couche (3c).

*CHARGES*

Les charges permettent d'apporter du renfort mécanique et peuvent aussi apporter des propriétés d'hydrophobicité, tout en améliorant la résistance mécanique et la conductivité thermique du revêtement.

Les charges n'ont pas pour seule fonction d'apporter de la couleur au revêtement, mais peuvent y contribuer.

La présence de charges avec une excellente conductivité thermique permet de compenser la faible conductivité thermique des polymères PAEK.

Avantageusement, la ou les charge(s) est/sont choisie(s) dans le groupe constitué des charges céramiques ($SiO_2$, etc.) et/ou minérales et/ou métalliques ($Al_2O_3$, $TiO_2$, etc.) et/ou silices et/ou des particules de diamant.

Préférentiellement, la ou les charge(s) est/sont choisie(s) dans le groupe constitué des oxydes métalliques, carbures métalliques, oxy-nitrures métalliques, nitrures métalliques, et leurs mélanges.

Avantageusement, ledit métal est un métal de transition, comme l'un au moins des éléments choisis parmi B, Ni, Ti, Zr ou Hf.

De manière encore préférée, la ou les charge(s) est/sont choisie(s) dans le groupe constitué de :

- charges pour le renfort : charges dures organiques ou inorganiques ; les charges dures inorganiques sont de préférence des particules de carbures de silicium ou d'alumine ou de zircone ou de graphite, ou de céramiques, ou de carbonate, ou de l'alumine hydratée, du trihydroxyde d'aluminium ou d'un ou plusieurs oxyde(s) métallique(s), du graphite, de graphène ;
- autres charges pour le renfort choisies parmi les oxydes métalliques : silice, micas, charges lamellaires, les argiles tels que la montmorillonite, la sépiolite, la gypsite, la kaolinite et la laponite, le dioxyde de zinc, le quartz, et le phosphate de zirconium, l'alumine, zircone, l'oxyde de zinc, l'oxyde de cuivre, l'oxyde de fer ;
- charges choisies parmi les fibres de renfort : fibre de verre ou de carbone ou d'aramide ;
- charges conductrices comprenant un carbure de métal de transition et/ou un nitrure de métal de transition : caractérisé en ce que le métal de transition est l'un au moins des éléments choisis parmi B, Ni, Ti, Zr ou Hf, par exemple : Nitrure de Bore cubique, particules de diamant, particules métalliques ;
- charges lamellaires pouvant conférer des propriétés lubrifiantes, comme par exemple les argiles, le graphène ou le graphite.

Les charges préférées en combinaison avec les organopolysiloxanes sont :

- des charges renforçantes : silice ou carbonates avec des taux de charges de mini 10-15 %/ wt et pouvant atteindre 60 %/wt,
- alumine, alumine hydratée, trihydroxyde d'aluminium,
- silice (précipitée ou pyrrogénée) avec un d50 < 0,1μm et une surface spécifique BET > 30 m2/g et de préférence comprise entre 30 et 500 m2/g,
- ou mélange de quartz et de silice, terres de diatomées ou du quartz broyé, titane, mica, talc, kaolin, sulfate de barium, chaux éteinte, oxyde de zinc, vermiculite expansée, vermiculite non expansée, carbonate de calcium etc.

De manière encore préférée, la ou les charge(s) est/sont choisie(s) dans le groupe constitué de l'alumine, le carbure de silicium, le carbure de tungstène, le nitrure de bore, le quartz, et leurs mélanges.

Avantageusement, les charges présentes dans la sous-couche (3a) sont des charges dures inorganiques, de préférence des oxydes, carbures, nitrures métalliques, de préférence l'alumine, les carbures de silicium ou la silice pyrogénée.

Certaines charges dures inorganiques comme le carbure de silicium, en plus de leurs performances de renfort mécanique, présentent également l'intérêt d'être des charges conductrices donc procurent une excellente conductivité thermique.

L'ajout de ce type de charge permet d'améliorer le rendu culinaire avec une meilleure diffusion de la chaleur du substrat métallique jusqu'aux aliments en contact avec le revêtement.

Avantageusement, le diamètre moyen d50 des charges est compris entre 0,1 et 50 μm, avantageusement encore entre 5 et 15 μm.

Avantageusement, la proportion de charges dans une couche est comprise entre 0,5 et 30 % en poids sec par rapport au poids total de ladite couche après cuisson, de préférence comprise entre 5 et 20 %.

Avantageusement, la proportion de charges dans la couche (3a) est supérieure à 20 % en poids, de préférence supérieure à 30 % en poids, par rapport au poids total de ladite couche.

Avantageusement, la proportion de charges dans la couche (3c) est inférieure à 10 % en poids par rapport au poids total de ladite couche.

Avantageusement, la proportion de charges dans la/les couche(s) (3ab) est inférieure à 10 % en poids par rapport au poids total de ladite couche.

Avantageusement, la proportion de charges dans les couches (3a), (3ab), (3b) et (3c) peut être identique ou différente.

Avantageusement, la nature des charges dans les couches (3a), (3ab), (3b) et (3c) peut être identique ou

différente.

*ADDITIFS*

Avantageusement, lesdits additifs sont choisis dans le groupe constitué des agents anti-mousse, agents dispersants, agents mouillants, épaississants, ajusteurs de pH, huiles silicone réactives.

Le ou lesdits agent(s) anti-mousse(s) (est)sont préférentiellement choisi(s) dans le groupe constitué de huiles minérales, diols, hydrocarbures, glycérides, oxyrane, acides gras émulsionnés.

Le ou les tensioactif(s) est(sont) préférentiellement choisi(s) dans le groupe constitué d'éther de glycol, alcool éthoxylé à l'exclusion des alkyl phenol éthoxylates (APE), les tensioactifs gemini.

Le ou les agent(s) dispersant est(sont) préférentiellement choisi(s) dans le groupe constitué des dispersants anioniques comme les dérivés d'acide gras.

Lesdits épaississants sont préférentiellement choisis dans le groupe constitué de copolymère base acrylique ou base polyuréthane, cellulose, silice pyrogénée.

Lesdits ajusteurs de pH sont préférentiellement choisis dans le groupe constitué des bases de Bronsted : ammoniaque, amines (triéthyl amine, triéthanolamine...), hydroxydes (soude, potasse ...), carbonates.

Avantageusement, la proportion d'additifs dans la couche (3a) est inférieure à 1 % en poids par rapport au poids total de ladite couche.

Avantageusement, la proportion d'additifs dans la couche (3c) est inférieure à 20 % en poids par rapport au poids total de ladite couche.

Avantageusement, la proportion d'additifs dans la/les couche(s) (3ab) est inférieure à 20 % en poids par rapport au poids total de ladite couche.

*AGENTS COLORANTS*

Avantageusement, le ou les agent(s) colorant(s) est/sont choisi(s) dans le groupe constitué de pigments thermochromes, pigments thermostables, paillettes, de préférence paillettes hologramme, et leurs mélanges.

Avantageusement, la proportion d'agents colorants dans la couche (3b) et la couche (3c) est comprise entre 0,5 et 50 % en poids sec par rapport au poids total de ladite couche après cuisson.

Avantageusement, la proportion d'agents colorants dans la couche (3b) va de 10 % à 40% en poids par rapport au poids total de ladite couche.

Avantageusement, la proportion d'agents colorants dans la couche (3c), lorsqu'ils sont présents, est inférieure à 10 % en poids par rapport au poids total de ladite couche.

Avantageusement, la proportion d'agents colorants dans les couches (3b) et (3c) peut être identique ou différente.

Avantageusement, la nature des agents colorants dans les couches (3b) et (3c) peut être identique ou différente.

<u>Pigments thermochromes</u>

De préférence, le ou les pigment(s) thermochrome(s) est/sont choisis dans le groupe constitué de $Bi_2O_3$, $Fe_2O_3$, $V_2O_5$, $WO_3$, $CeO_2$, $In_2O_3$, $Y_{1,84}Ca_{0,16}Ti_{1,84}V_{0,16}O_{1,84}$, AgI, $(Bi_{1-x}A_x)(V_{1-y}M_y)O_4$ avec

- x est égal à 0 ou x est compris de 0,001 à 0,999,
- y est égal à 0 ou y est compris de 0,001 à 0,999,
- A et M sont choisis dans le groupe constitué de l'azote, le phosphore, un métal alcalin, un métal alcalinoterreux, un métal de transition, un métal pauvre, un métalloïde ou un lanthanide,
- A et M sont différents l'un de l'autre.

Sachant que A et M sont différents l'un de l'autre, lorsque :

- A est un métal alcalin, il peut être choisi parmi Li, Na, K, Rb, Cs,
- M est un métal alcalin, il peut être choisi parmi Li, Na, K, Rb, Cs,
- A est un métal alcalinoterreux, il peut être choisi parmi Be, Mg, Ca, Sr, Ba,
- M est un métal alcalinoterreux, il peut être choisi parmi Be, Mg, Ca, Sr, Ba,
- A est un métal de transition, il peut être choisi parmi Sc, Ti Cr, Mn, Fe, Co, Ni, Cu, Y, Zr, Nb, Mo, Ru, Rh, Pd, Ag, Ta, W, Ir,
- M est un métal de transition, il peut être choisi parmi Sc, Ti Cr, Mn, Fe, Co, Ni, Cu, Y, Zr, Nb, Mo, Ru, Rh, Pd, Ag, Ta, W, Ir,
- A est un métal pauvre, il peut être choisi parmi Al, Zn, Ga, In, Sn,
- M est un métal pauvre, il peut être choisi parmi Al, Zn, Ga, In, Sn,

- A est un métalloïde, il peut être choisi parmi B, Si, Ge, Sb,
- M est un métalloïde, il peut être choisi parmi B, Si, Ge, Sb,
- A est un lanthanide, il peut être choisi parmi La, Ce, Pr, Nd, Pm, Sm, Eu, Gd, Tb, Dy, Ho, Er, Tm, Yb, Lu,
- M est un lanthanide, il peut être choisi parmi La, Ce, Pr, Nd, Pm, Sm, Eu, Gd, Tb, Dy, Ho, Er, Tm, Yb, Lu.

De préférence, A et M différents l'un de l'autre sont B et/ou Mg.

De préférence, le pigment $(Bi_{1-x}A_x)(V_{1-y}M_y)O_4$ présente une forme cristallographique monoclinique scheelite à température ambiante.

De préférence, x et y valent 0, c'est-à-dire que le pigment $(Bi_{1-x}A_x)(V_{1-y}M_y)O_4$ est le Vanadate de Bismuth ($BiVO_4$). Avantageusement, est utilisé un $BiVO_4$ de structure cristallographique monoclinique scheelite à température ambiante.

Le Vanadate de Bismuth est un composé inorganique de couleur jaune, de formule $BiVO_4$, largement utilisé pour ses propriétés coloristiques et pour son absence de toxicité. Enregistré dans la base de données Colour Index International en tant que Q. I. Pigment Yellow 184, il est notamment commercialisé par les sociétés Heubach (Vanadur®), BASF (Sicopal®), FERRO (Lysopac) ou encore Bruchsaler Farbenfabrik (Brufasol®).

Pigments thermostables

De préférence, le ou les pigment(s) thermostable(s) est/sont choisi(s) dans le groupe constitué de :

- Pigment jaune de type rutile de titane,
- Pigment jaune dérivé du bismuth, par exemple sélectionné parmi les vanadates de bismuth stabilisés ($Py_{184}$)
- Pigment rouge, par exemple sélectionné parmi rouge de pérylène (par exemple PR149, PR178 et PR224), oxyde de fer,
- Pigment orange de type oxyhalogénures de bismuth ($PO_{85}$),
- Pigment orange de vanadate de bismuth ($PO_{86}$)
- Pigment orange de zinc étain titane ($PO_{82}$)
- Pigment orange de sulfure de cérium ($PO_{75}$ ; $PO_{78}$)
- Pigment jaune orangé de type rutile d'antimoine titane chrome ($PBr_{24}$)
- Pigment jaune orangé de type rutile d'étain et de zinc ($Py_{216}$)
- Pigment jaune orangé d'oxyde de niobium sulfure étain zinc ($Py_{227}$)
- Pigment jaune orangé d'oxydes doubles d'étain et de niobium
- $Co_3(PO4)_2$
- $LiCoPO_4$
- $CoAl_2O_4$
- $Cr_2O_3$
- $TiO_2$
- Pigment noir PBk28 (Copper chromite black spinel)
- et leurs mélanges.

Décors

Selon un mode de réalisation, la ou les couche(s) (3b) est(sont) continue(s) et recouvre(nt) la totalité de la couche (3a) (voir Figure 1).

Selon un autre mode de réalisation, la ou les couche(s) (3b) ne recouvre(nt) pas la totalité de la couche (3a) et forme(nt) au moins un décor (voir Figure 2).

Avantageusement, la ou les couche(s) (3b) composent plusieurs décors, l'un (i) comprenant un ou plusieurs pigment(s) thermochrome(s) et l'autre (j) comprenant au moins une composition pigmentaire de référence de température (voir Figure 3).

Selon un mode de réalisation, chacun des deux décors (i) et (j) se présente sous forme de motifs adjacents non chevauchants. Par exemple, chaque décor est représenté par des motifs géométriques différents répartis uniformément sur toute la surface et alternés les uns par rapport aux autres (voir Figure 4A).

Selon un autre mode de réalisation, les deux décors (i) et (j) sont partiellement chevauchants. Par exemple, chaque décor est représenté par des motifs géométriques différents répartis uniformément sur toute la surface et partiellement chevauchants (voir Figure 4B).

De préférence, les deux décors (i) et (j) sont chevauchants, soit parce qu'un des deux décors est une couche continue et l'autre décor la recouvre sous forme de motifs, soit parce que les deux décors (i) et (j) se présentent sous forme de motifs chevauchants (voir Figure 4C).

Paillettes

Les paillettes utilisables peuvent être indépendamment choisies parmi les paillettes de mica, enrobées ou non, les paillettes de silice, enrobées ou non, les paillettes d'aluminium, enrobées ou non, les paillettes d'oxyde de fer, enrobées ou non. Les paillettes de mica ou de silice enrobées de dioxyde de titane. Les paillettes utilisables peuvent être traitées pour donner un effet de couleur particulier.
Avantageusement, le ou les paillette(s) est/sont des particules choisies dans le groupe constitué des particules de mica, d'aluminium, de mica enrobé de dioxyde de titane ou leurs mélanges.

Paillettes hologramme

Avantageusement, le ou les paillette(s) est/sont des paillettes hologramme c'est-à-dire un mélange de particules magnétisables et de particules non magnétisables.
Les particules magnétisables peuvent être avantageusement des particules comprenant au moins un métal ferromagnétique. Ces particules magnétisables peuvent être de nature homogène, c'est-à-dire constituées du même matériau, ou de nature composite, c'est-à-dire que ces particules magnétisables ont une structure cœur-enveloppe, dans laquelle le métal ferromagnétique se trouve dans le cœur et/ou dans l'enveloppe desdites particules. A titre d'exemples de particules magnétisables composites, on peut notamment citer des paillettes de mica enrobées d'oxyde de fer Fe2O3 ou des fibres d'acier inoxydable enrobées d'un matériau sol-gel, comme protection vis-à-vis de la corrosion lors des étapes de mise en œuvre du revêtement, ou encore des paillettes en matériau plastique enrobées d'oxyde de fer Fe2O3, ou des paillettes dont le cœur est en métal ferromagnétique et l'enveloppe est formée d'un matériau plastique ou en un matériau sol-gel.
Selon un mode de réalisation, une partie desdites particules magnétisables est orientée de manière à former un décor tridimensionnel.
Avantageusement, le mélange de particules magnétisables et de particules non magnétisables représente entre 1 % et 5 % en poids du poids de la couche, de préférence entre 2 % et 3 % en poids.
Avantageusement, le pourcentage de particules non magnétisables dans le mélange de particules magnétisables et de particules non magnétisables est compris entre 15 % et 40 % en poids par rapport au poids total du mélange de particules magnétisables et de particules non magnétisables.
Avantageusement, les particules magnétisables présentent une dimension D50 inférieure ou égale à 23 $\mu$m.
Par le terme « D50 », on entend la dimension maximale que présentent 50 % des particules en nombre.
Avantageusement, les particules non magnétisables présentent une dimension D90 comprise entre 20 % et 250 % de la dimension D90 des particules magnétisables.
Par le terme « D90 », on entend la dimension maximale que présentent 90 % des particules en nombre.
Avantageusement, les particules magnétisables et/ou les particules non magnétisables sont colorées en surface.
Avantageusement, les particules non magnétisables sont constituées de mica, d'aluminium, ou de mica enrobé de dioxyde de titane.
Avantageusement, les particules magnétisables sont constituées de fer, d'oxyde de fer, d'aluminium enrobé de fer, ou de mica enrobé de fer, le fer se présentant sous forme ferritique.

*ARCHITECTURES PREFEREES*

L'invention concerne un élément de cuisson revêtu (1) pour article culinaire ou appareil électrique de cuisson, comportant un substrat métallique (2) revêtu sur au moins une face (2a) uniquement par les couches suivantes superposées dans cet ordre à partir du substrat métallique (2) :

(3a) sous-couche d'accroche comprenant entre 20 % et 100 % en poids du poids total de la sous-couche d'un ou plusieurs polymère(s) ($\alpha$) choisis dans le groupe constitué des polyaryléthercétones (PAEK) et d'un ou plusieurs polymère(s) choisis dans le groupe constitué des polyetherimides (PEI), des polyimides (PI), des polyamide imides (PAI) et des polybenzymidazole (PBI), avec un ratio en poids PAEK:(PEI+PI+PAI+PBI) compris entre 1:1 et 15:1,
(3b) éventuellement, une ou des couche(s) intermédiaire(s) constituée(s) d'un ou plusieurs agent(s) colorant(s) et éventuellement

- d'une ou plusieurs résine(s) silicone, et/ou
- d'un ou plusieurs polymère(s) thermoplastique(s) et/ou,
- d'une ou plusieurs charge(s), et/ou
- d'un ou plusieurs additif(s)

(3c) une couche de finition constituée d'une ou plusieurs résine(s) silicone en une portion supérieure ou égale à 20% en poids par rapport au poids total de la couche (3c),
et éventuellement

- d'un ou plusieurs polymère(s) thermoplastique(s), et/ou
- d'une ou plusieurs charge(s), et/ou
- d'un ou plusieurs additif(s), et/ou
- de paillettes.

L'épaisseur de la sous-couche d'accroche (3a) est avantageusement comprise entre 30 et 60 μm.
De préférence, l'agent colorant de la ou des couche(s) intermédiaire(s) (3b) comprend(nent) des pigments et/ou des paillettes, avantageusement hologrammes.
Selon une variante, la ou les couche intermédiaire (3b) est(sont) constituée(s) :

- d'un ou plusieurs agent(s) colorant(s), notamment des pigments et/ou des paillettes, avantageusement hologrammes,
- d'un ou plusieurs polymère(s) thermoplastique(s) avantageusement choisis par les polyamideimide (PAI), polyimide (PI), polyetherimide (PEI), des polybenzymidazole (PBI), polyethersulfone (PES), polyphenylene ether sulfone (PPSU), polyarylether cétone (PAEK), et leurs mélanges,
- de 0 à 10 % de charges,
- de 0 à 20 % d'additifs,
- Optionnellement d'une ou plusieurs résine(s) silicone.

Selon une autre variante, la ou les couche intermédiaire (3b) est(sont) constituée(s) :

- d'un ou plusieurs agent(s) colorant(s), notamment des pigments et/ou des paillettes, avantageusement hologrammes,
- de 0 à 10 % de charges,
- de 0 à 20 % d'additifs,
- d'une ou plusieurs résine(s) silicone, et
- optionnellement d'un ou plusieurs polymère(s) thermoplastique(s) avantageusement choisis par les polyamideimide (PAI), polyimide (PI), polyetherimide (PEI), des polybenzymidazole (PBI), polyethersulfone (PES), polyphenylene ether sulfone (PPSU), polyarylether cétone (PAEK), et leurs mélanges.

Selon une variante particulière, la ou les couche(s) intermédiaire(s) (3b) ne comprend(nent) pas de résine silicone.
Selon une autre variante particulière, la ou les couche(s) intermédiaire(s) (3b) est(sont) constituée(s) :

- d'un ou plusieurs agent(s) colorant(s), notamment des pigments et/ou des paillettes, avantageusement hologrammes,
- d'un ou plusieurs polymère(s) thermoplastique(s) avantageusement choisis par les polyamideimide (PAI), polyimide (PI), polyetherimide (PEI), des polybenzymidazole (PBI), polyethersulfone (PES), polyphenylene ether sulfone (PPSU), polyarylether cétone (PAEK), et leurs mélanges,
- de 0 à 10 % de charges,
- de 0 à 20 % d'additifs,
- d'une ou plusieurs résine(s) silicone.

Selon un mode de réalisation particulier, le revêtement comprend deux couches intermédiaires (3b), dont au moins une couche de décor. Avantageusement, la ou les couche(s) (3b) composent plusieurs décors, l'un (i) comprenant un ou plusieurs pigment(s) thermochrome(s) et l'autre (j) comprenant au moins une composition pigmentaire de référence de température.
Typiquement, l'épaisseur de la ou de l'ensemble des couche(s) intermédiaire(s) (3b) est comprise entre 3 μm et 10 μm.
De préférence, lorsqu'elle(s) est(sont) présente(s), la ou les couche(s) intermédiaire(s) (3b) recouvre(nt) en partie uniquement la couche de base (3a).
Alternativement, selon un autre mode de réalisation, le revêtement est dépourvu de couche intermédiaire (3b). Dans ce cas, la couche (3c) est appliquée sur la couche (3a) ou sur la dernière couche (3ab).
Selon un mode de réalisation, la couche de finition (3c) est constituée d'une ou plusieurs résine(s) silicone et

éventuellement d'un ou plusieurs polymère(s) thermoplastique(s).

Selon un autre mode de réalisation, la couche de finition (3c) est constituée d'une ou plusieurs résine(s) silicone et d'un ou plusieurs polymère(s) thermoplastique(s).

Typiquement, l'épaisseur de la couche (3c) est comprise entre 0,1 μm et 10 μm.

Dans un mode de réalisation particulier, l'épaisseur moyenne de la sous-couche d'accroche (3a) est comprise entre 30 et 60 μm, l'épaisseur de la couche (3b) est comprise entre 3 μm et 10 μm, et l'épaisseur de la couche (3c) est comprise entre 0,1 μm et 10 μm.

L'épaisseur moyenne de la sous-couche d'accroche (3a) est par exemple la moyenne d'au moins 10 mesures, de préférence 15 mesures, d'épaisseur en 10, respectivement 15, endroits aléatoires.

*PROCEDE*

L'invention concerne également un procédé de fabrication d'un élément de cuisson revêtu (1) selon l'invention comprenant les étapes successives suivantes :

i. une étape de fourniture d'un support (2) métallique, comprenant deux faces opposées,
ii. de manière optionnelle, une étape de traitement de la face (2a) du support (2), pour obtenir une face (2a) traitée favorisant l'adhérence d'une sous-couche d'accroche (3a) sur le support (2)
iii. dépôt sur la face (2a) du support (2) d'une ou plusieurs couches continues de la sous-couche d'accroche (3a),
iv. éventuellement séchage et/ou frittage à une T°C > 400°C
v. éventuellement application de la ou des couche(s) (3ab) et/ou de la ou des couche(s) intermédiaire(s) (3b) ;
vi. application de la couche de finition (3c) ;
vii. cuisson à une T° de 230°C à 420°C.

Avantageusement, les étapes du procédé selon l'invention permettent de revêtir le support (2) métallique par un revêtement (3) formé par les couches (3a), éventuellement (3ab) et (3b), et (3c). Généralement, ces couches sont humides lors de leur application. Par couche humide, il est entendu au sens de la présente invention que la couche comprend tout ou partie de ses solvants.

De préférence, tout ou partie des solvants de la couche humide sont éliminés, soit naturellement soit par un traitement physique par exemple par séchage thermique, par séchage par flux d'air ou par traitement sous-vide.

De manière avantageuse, la composition de revêtement peut comprendre en outre au moins un solvant. Avantageusement, le solvant peut être protique. Avantageusement, le solvant peut être non toxique.

Le solvant utilisable dans la composition de revêtement peut avantageusement comprendre au moins un alcool, et peut être choisi de préférence parmi l'isopropanol, le méthanol, l'éthanol et leurs mélanges.

L'application du revêtement se fait en plusieurs couches. Dans ce cas, le dépôt sur au moins une des deux faces opposées dudit support d'au moins une couche du revêtement (3) est répétée plusieurs fois. De préférence, une étape de séchage est réalisée entre l'application de chaque couche, puis la cuisson dudit support revêtu est réalisée après application de la dernière couche. L'application du revêtement (3) par le procédé selon l'invention sur le support (2) permet d'obtenir une couche de revêtement thermostable.

La formule de revêtement à enduire est généralement sous forme aqueuse, les polymères de la phase polymérique étant sous forme de suspensions. D'autres solvants non aqueux peuvent également convenir.

Avantageusement, le procédé de fabrication d'un élément de cuisson revêtu (1) comprend une étape ou plusieurs étapes de séchage entre 80 et 150°C après application de chacune des couches. Le séchage peut être réalisé par convection ou infrarouge.

L'application du revêtement selon l'invention par le procédé selon l'invention peut avantageusement se faire sur le support à plat ou bien sur le support en forme ou bien sur une zone localement plate du support en forme. Il est obtenu une couche de revêtement thermostable. Généralement, cette couche de revêtement est humide.

Avantageusement, le procédé de fabrication d'un élément de cuisson revêtu (1) comprend une étape de mise en forme dudit support (2) métallique avant l'étape iii. ou après l'étape vi. ou après l'étape vii. de cuisson. La mise en forme est également appelée emboutissage.

Lorsque l'étape de mise en forme précède l'application iii du revêtement, l'enduction est préférentiellement réalisée par pulvérisation.

Lorsque cette étape de mise en forme est subséquente à l'application vii. du revêtement, l'enduction est préférentiellement réalisée par sérigraphie ou par rouleau.

Le procédé selon l'invention comprend une étape vii. de cuisson de l'élément obtenu à l'étape vi. du procédé. Par cuisson du substrat revêtu, on entend, au sens de la présente invention, un traitement thermique qui permet de densifier la ou les couches de revêtement appliquées sur le substrat, mais également de réticuler les précurseurs organopolysiloxanes (résine silicone).

A l'étape vii., la cuisson est réalisée. Généralement la température de cuisson de l'étape viii. est comprise de 230°C à 420°C.

Avantageusement, le procédé de fabrication d'un élément de cuisson revêtu (1) comprend une unique étape de cuisson vii. finale de l'ensemble des couches appliquées. Cette seule étape de cuisson est réalisée simultanément pour l'ensemble des couches appliquées.

Avantageusement, le procédé de fabrication d'un élément de cuisson revêtu (1) comprend une étape de mise en forme dudit support (2) avant ou après l'étape iii. La mise en forme est également appelée emboutissage.

De préférence, le support (2) métallique à l'étape i) se présente sous forme de disque, de préférence de disque plat dont la mise en forme est réalisée après application du revêtement.

Avantageusement, le procédé ne comprend pas d'autre étape de séchage et/ou cuisson que celle de l'étape (vii).

Les étapes (iii) et (vi) d'application et (v) d'application de la ou des couche(s) (3ab) peuvent être réalisées par poudrage électrostatique, par pulvérisation spray en phase solvantée ou aqueuse, par sérigraphie, par rouleau ou par impression digitale.

L'étape (v) d'application de la ou des couche(s) intermédiaire(s) (3b) peut être réalisée par tampographie, sérigraphie, jet d'encre, flexographie.

*ARTICLE*

L'invention concerne également un article culinaire (100) comprenant un élément de cuisson revêtu (1).

Selon un mode de réalisation, l'article culinaire (100) comporte une face de chauffe (6) destinée à être mise en contact avec une source de chauffage extérieure, la face de chauffe (6) étant opposée à la face de cuisson (5) destinée à être mise en contact avec les aliments lors de la cuisson.

Avantageusement, l'article culinaire (100) est choisi dans le groupe constitué de casserole, poêle, poêlons ou caquelons pour fondue ou raclette, fait-tout, wok, sauteuse, crêpière, grill, plancha, marmite, cocotte, cuve de cuiseur ou de machine à pain, moule culinaire.

L'invention concerne également un appareil électrique de cuisson (200) comportant un élément de cuisson revêtu (1) selon l'invention et une source de chauffage (210) configurée pour chauffer ledit élément de cuisson revêtu (1).

Avantageusement, l'appareil électrique de cuisson (200) est choisi dans le groupe constitué de crêpière électrique, appareil électrique à raclette, appareil électrique à fondue, grill électrique, plancha électrique, cuiseur électrique, machine à pain, appareil électrique de cuisson sous pression, les gaufriers, les cuiseurs à riz et les confituriers.

L'article culinaire peut notamment être un article culinaire dont l'une des deux faces opposées du substrat est une face intérieure, éventuellement concave, destinée à être disposée du côté d'aliments susceptibles d'être introduits dans ou sur ledit article, et dont l'autre face du substrat est une face extérieure, éventuellement convexe, destinée à être disposée vers une source de chaleur.

A titre d'exemples non limitatifs d'articles culinaires, on citera notamment des articles culinaires tels que les casseroles et les poêles, les woks et les sauteuses, les fait-tout et les marmites, les crêpières, les moules et plaques pour la pâtisserie, les plaques et grilles de barbecue, les bols de préparation.

**EXEMPLES**

On comprendra mieux les buts, aspects et avantages de la présente invention, d'après la description donnée ci-après d'un mode particulier de réalisation présenté à titre d'exemple non limitatif.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention, tel que défini dans les revendications.

**1) Exemples de réalisation :**

**Matières premières pour la couche (3a) :**

- Résines polymères hétérocycliques :
  - Résine PolyAmide-Imide (PAI) à 29 % d'extrait sec dans la N-butylpyrrolidone (NBP),
  - Résine sous forme de poudre : PolyAcide amique à 90 % d'extrait sec dans la N-méthylpyrrolidone (NMP/ Eau), référence de chez SOLVAY, grade TORLON AI10LS,

  - Résine en solvant : Polybenzimidazole (PBI) à 9 % dans le diméthylacétamide (DMAc).

- Autres résines polymères aromatiques :

  - Résine poudre PolyEtherEtherCétone (PEEK), Vicote 704 de chez VICTREX, poudre polymère avec un d50 de 10 µm,
  - Résine poudre PEKK, KEPSTAN 7002 PT de Arkema avec un d50 de 20 µm,
  - Résine poudre PEKK, KEPSTAN 6002 PT de Arkema avec un d50 de 50 µm,
  - Résine poudre PolyEtherSulfone (PES), grade micronisé de chez SOLVAY, poudre polymère avec un d50 de 40 µm.

- Résines polymères fluorées (à prédisperser à 20 % dans du PPG avec UltraTurrax, 20 000 rpm) :

  - Poudre PTFE de 3M / DYNEON : TF 9207 Z,
  - Poudre FEP de 3M / DYNEON : 6233PZ.

- Solvants aprotiques polaires non étiquetés c'est-à-dire non toxiques)

  - N-formylmorpholine (NFM),
  - N-Méthyl Imidazole (NMI),
  - N-ButylPyrrolidone (NBP).

- Solvant Alcool

  - Propylène Glycol : PPG,
  - Diethyleneglycol : butyl diglycol.

- Tensio-actif et agent anti-mousse

  - Tego foamex K7 de chez Evonik,
  - Genapol X089 de chez Clariant.

- Charges de renfort :

  - Alumine, grade CAHP-F240 (granulométrie en d50 : 50 µm),
  - Carbure de Silicium, grades SIKA 400, SIKA 320,
  - Silice pyrogénée,
  - MICA MILL200/325.

- Pigment :

  - Noir 100,
  - Bleu CM13,
  - Rouge brique perylene (indicateur d'usure),
  - Titane,
  - Talc,
  - Graphite.

- Résine acrylique :

  - Modarez PW336 : solution de polymère acrylique à 30 % en phase aqueuse,
  - Rohagit SD 15 : solution de polymère acrylique à 30 % en phase aqueuse.

**Matières premières pour les couches intermédiaires (3b et 3b') et la couche de finition (3c) :**

- Résines silicones :

◦ RS1 : Résine silicone polyester fonctionnalisée éthoxy (80% Silicone/20% polyester) en phase solvant, Viscosité à 25 °C Approx. 2000 mPas, Taux de solide = 75 %
◦ RS2 : Résine silicone polyester fonctionnalisée éthoxy (50% Silicone/50% polyester) en phase solvant, Viscosité à 25 °C Approx. 2000 mPas, Taux de solide = 75 %
◦ RS3 : Résine silicone polyester fonctionnalisée éthoxy (30% Silicone/70% polyester) en phase solvant, Viscosité à 25 °C Approx. 2000 mPas, Taux de solide = 75 %
◦ RS4 : Résine silicone polyester fonctionnalisée méthyl phényl en phase solvant, Viscosité à 25 °C Approx. 2000 mPas, Taux de solide = 75 %
◦ RS5 : Résine silicone polyester fonctionnalisée méthoxy (50% Silicone/50% polyester) en phase solvant, Viscosité à 25 °C Approx. 2000 mPas, Taux de solide = 75 %
◦ RS6 : Résine organopolysiloxane méthyl fonctionnalisée éthoxy en émulsion aqueuse, Viscosité à 25 °C Approx. 1500 mPas, Taux de solide = 52 %

- Résines polymères hétérocycliques :

o Résine PolyAmide-Imide (PAI) à 29 % d'extrait sec dans la N-butylpyrrolidone (NBP), Torlon de chez SOLVAY

- Autres résines polymères aromatiques :

◦ Résine poudre PolyEtherEtherCétone (PEEK), Vicote 703 de chez VICTREX, poudre polymère avec un d50 de 25 µm,
◦ Résine poudre PolyEtherEtherCétone (PEEK), Vicote 704 de chez VICTREX, poudre polymère avec un d50 de 10 µm,
◦ Résine poudre PEKK, KEPSTAN 7002 PT de Arkema avec un d50 de 20 µm,
◦ Résine poudre PEKK, KEPSTAN 6002 PT de Arkema avec un d50 de 50 µm,
◦ Résine poudre PolyEtherSulfone (PES), grade micronisé de chez SOLVAY, poudre polymère avec un d50 de 40 µm.

- Solvant Alcool

◦ di propylène glycol butyle éther (DPNB),
◦ Acétate de 2-méthoxy-1-méthyléthyle (MPA),
◦ Butyl Glycol acétate (BGA),
◦ Butyl acétate,

- Tensio-actif et agent anti-mousse

◦ Huile minérale : Tego foamex K7 de chez Evonik
◦ Éther de poly glycol d'alcool gras : Genapol X080 de chez Clariant ou Tergitole TMN-100X,

- Charges de renfort :

◦ Silice pyrogénée : Levasil CC301,
◦ Fumée de silice post traitée diméthyle dichlorosilane : Aerosil R972

- Pigments :

◦ Mica : IRIODIN 100 ou IRIODIN 300 et /ou Magnapearl 5000,
◦ Oxyde de Cr/Fe : Sicopal black K0098FK,
◦ Noir de carbone : Derussol F25 ou Cabot Monarch 4750,
◦ Rouge de périlène : Paliogen red (PR178)
◦ Trioxyde de fer : brique H856

- Résine acrylique :

◦ Rohagit SD 15 : solution de polymère acrylique à 30 % en phase aqueuse

- Huile silicone :

- ◦ Polysiloxane modifié polyéther : TEGO GLIDE 100,
- ◦ Huile polyydiméthylsiloxane : CT 601M

- Autres additifs :

  - ◦ AMP 90 : solution de 2-amino-2-méthyl-1-propanol : polymère à 90% en phase aqueuse, agent tampon,
  - ◦ Metolat 368 : ester d'acide gras,
  - ◦ Dolfynox 1030 : Ether de polyglycol propoxylé, agent mouillant,
  - ◦ Edaplan LA 451 : ester anionique dans éthanol/eau, agent mouillant,
  - ◦ Tego Glide 407 : méthyle phényle polysiloxane, agent d'écoulement.

**Principe de fonctionnement du broyeur en jarre (broyage mécanique)**

Le broyage à billes consiste à charger une jarre avec l'échantillon à broyer et des billes dites de broyage et à faire tourner la jarre autour de son axe à une certaine vitesse. La rotation de la jarre s'effectue généralement à l'aide d'une machine à rouleaux. L'échantillon peut être broyé sous forme sèche ou dispersée dans un solvant approprié (par ex. dans l'eau ou dans l'alcool). La dispersion peut également contenir certains adjuvants (comme un dispersant ou un anti-mousse).

Le diamètre moyen des billes de broyage doit être adapté à la dimension des particules à broyer. Plus les particules sont fines, plus le diamètre des billes à utiliser sera petit. Le volume total de billes, y compris les vides entre les billes, représentera environ 50-60 % du volume intérieur de la jarre. Les billes de tailles différentes sont avantageusement réparties selon la proportion pondérale suivante par rapport au poids total des billes : 25 % de petites billes, 50 % de billes moyennes et 25 % de grosses billes. La dimension des billes les plus petites est comprise entre 2 et 10 mm. L'alumine et la zircone stabilisée sont couramment utilisées comme matériau des billes.

Exemples de réalisation de l'article culinaire:

Sur disque en aluminium mis en forme (30 cm de diamètre), préalablement dégraissé et sablé pour obtenir une rugosité de 4 à 7 µm (Ra), est déposée par pulvérisation une couche continue 3a choisie parmi les compositions de couche de base (3a1 à 3a4) telles que décrites ci-dessous :

**Couches 3a :**

**Couche 3a1 :**

Préparation d'une composition aqueuse de semi-fini SF1 à base de polymère hétérocyclique avec une amine et du solvant aprotique polaire non étiqueté.

On réalise une composition aqueuse de semi-fini SF1 comportant les composés suivants, leurs quantités respectives étant indiquées ci-après :

| | |
|---|---|
| Résine PAI à 29 % d'extrait sec dans NBP | 327,9 g |
| NBP | 117,7 g |
| Triéthylamine | 32,8 g |
| Eau déminéralisée | 521,6 g |
| TOTAL | 1000,0 g |

La mise en œuvre de la PAI comporte une étape de passage en phase aqueuse via l'obtention d'un sel de polyamide-acide amique. Cette étape est réalisée dans un broyeur à billes de marque Discontimill®, à température ambiante en présence d'amine.

Les propriétés de la composition aqueuse SF1 ainsi obtenue sont les suivantes :

- Extrait sec théorique : 9,5 %
- Extrait sec mesuré dans la composition : 9,3 %

Préparation d'une composition de semi-fini SF2 réalisée dans un broyeur à billes pendant 20 minutes pour

l'obtention de la pâte broyée ci-dessous, référencée SF2.

| | |
|---|---|
| Propylene glycol | 23,6 g |
| NFM | 23,6 g |
| Genapol X089 | 4,7 g |
| Tego foamex K7 | 1,9 g |
| Pigment Noir 100 | 14,9 g |
| PEEK Vicote 704 | 14,2 g |
| PES | 17,1 g |
| TOTAL | 100 g |

Composition de la sous-couche 3a1

L'étape finale est réalisée dans un disperseur de type Rayneri pour l'obtention de la sous-couche d'accroche ci-dessous :

| | |
|---|---|
| SF1 | 10,8 g |
| SF2 | 55,4 g |
| eau | 19,3 g |
| Charges SIKA400 | 12,4 g |
| Résine acrylique Rohagit SD 15 | 2,1 g |
| TOTAL | 100 g |

Les propriétés de la sous-couche 3a1 ainsi obtenue sont les suivantes :

- Le ratio final massique du mélange de résines polymères est le suivant : **PEEK** / PAI / PES/ Charge/ Résine acrylique / Pigment : 19 / 3 / 23 / 30 / 5 / 20
- Extrait sec théorique : 41,1 %
- Viscosité mesurée en Coupe AFNOR CA6 : 45 sec

L'épaisseur de la couche 3a1 est comprise entre 50 µm à 100 µm, de préférence 40 µm à 60 µm.

**Couche 3a2 :**

Préparation d'une composition de semi-fini SF3 réalisée dans un broyeur à billes pendant 20 minutes pour l'obtention de la pâte broyée ci-dessous, référencée SF3.

| | |
|---|---|
| Propylene glycol | 21,4 g |
| NFM | 21,4 g |
| Genapol X089 | 8,0 g |
| Tego foamex K7 | 1,5 g |
| Pigment Noir 100 | 15,9 g |
| PEEK Vicote 704 | 12,9 g |
| PES | 18,9 g |
| TOTAL | 100 g |

Composition de la sous-couche 3a2

L'étape finale est réalisée dans un disperseur de type Rayneri pour l'obtention de la sous-couche d'accroche ci-dessous :

| | |
|---|---|
| SF1 | 11,7 g |
| SF3 | 56,3 g |
| eau | 17,1 g |
| Charges SIKA400 | 12,8 g |
| Résine acrylique Rohagit SD 15 | 2,1 g |
| TOTAL | 100 g |

Les propriétés de la sous-couche 3a2 ainsi obtenue sont les suivantes :

- Le ratio final massique du mélange de résines polymères est le suivant : PEEK / PAI / PES/ Charge/ Résine acrylique / Pigment : 17 / 3 / 25 / 30 / 5 / 20
- Extrait sec théorique : 42,4 %
- Viscosité mesurée en Coupe AFNOR CA6 : 55 sec

L'épaisseur de cette couche SCD4 de l'exemple 4 est comprise entre 50 μm à 100 μm, de préférence 40 μm à 60 μm.

**Couche 3a3 :**

Préparation d'une composition de semi-fini SF4 réalisée dans un broyeur à billes pendant 20 minutes pour l'obtention de la pâte broyée ci-dessous, référencée SF4.

| | |
|---|---|
| Propylene glycol | 20,1 g |
| NFM | 20,1 g |
| Genapol X089 | 6,7 g |
| Tego foamex K7 | 2,0 g |
| PEEK Vicote 704 | 40,3 g |
| PES | 10,8 g |
| TOTAL | 100 g |

Composition de la sous-couche 3a3

L'étape finale est réalisée dans un disperseur de type Rayneri pour l'obtention de la sous-couche dure ci-dessous :

| | |
|---|---|
| SF1 | 18,5 g |
| SF4 | 72,1 g |
| Eau | 9,4 g |
| TOTAL | 100 g |

Les propriétés de la sous-couche 3a3 ainsi obtenue sont les suivantes :

- Le ratio final massique du mélange de résines polymères est le suivant : PEEK / PAI / PES/: 75/ 5 / 20
- Extrait sec théorique : 38,5 %
- Viscosité mesurée en Coupe AFNOR CA6 : 1 min40sec

L'épaisseur de cette couche SCD6 de l'exemple 6 est comprise entre 50 μm à 100 μm, de préférence 40 μm à 60 μm.

**Couche 3a4 :**

Préparation d'une composition de semi-fini SF5 réalisée dans un broyeur à billes pendant 20 minutes pour

l'obtention de la pâte broyée ci-dessous, référencée SF5.

| | |
|---|---|
| Propylene glycol | 24,2 g |
| NFM | 24,2 g |
| Genapol X089 | 8,1 g |
| Tego foamex K7 | 1,7 g |
| PEEK Vicote 704 | 28,3 g |
| Pigment Noir 100 | 13,5 g |
| TOTAL | 100 g |

Composition de la sous-couche 3a4 est réalisée dans un disperseur de type Rayneri pour l'obtention de la sous-couche dure ci-dessous :

| | |
|---|---|
| SF1 | 11,2 g |
| SF5 | 61,1 g |
| EAU | 13,3 g |
| Charges SIKA400 | 12,3 g |
| Résine acrylique Rohagit SD 15 | 2,1 g |
| TOTAL | 100 g |

Les propriétés de la sous-couche 3a4 ainsi obtenue sont les suivantes :

- Le ratio final massique du mélange de résines polymères est le suivant : PEEK / PAI / Charge/ Résine acrylique / Pigment : 42 / 3 / 30 / 5 / 20
- Extrait sec théorique : 41,0 %
- Viscosité mesurée en Coupe AFNOR CA6 : 55 sec

L'épaisseur de cette couche SCD9 du contre-exemple 3 est comprise entre 50 μm à 100 μm, de préférence 40 μm à 60 μm.

<u>**Couche intermédiaire (3b)**</u>

Puis est déposée par pulvérisation sur une des couches (3a) une couche continue (3b) choisie parmi les compositions de couche telles que décrites ci-dessous : couche 3b1, couche 3b2 et couche 3b3 :

| Composant de la couche 3b1 | rôle | % en liquide | % en phase solide, après cuisson |
|---|---|---|---|
| Résine silicone : RS1 ou RS2 ou RS3 ou RS4 ou RS5 ou RS6 | liant | 30 | 59,6 |
| di propylène glycol butyle éther | solvant | 3 | 0 |
| Ester d'acide gras | | 3 | 0,5 |
| Oxyde de Cr/Fe | pigment | 10 | 33,1 |
| Eau déionisée | solvant | 41,40 | 0 |
| Ether de polyglycol d'alcool gras | | 4,60 | 0,6 |
| Huile minérale | Agent anti-mousse | 2 | 0,7 |
| silice | | 5 | 5 |
| 2-amino-2-méthyl-1-propanol | | 0,5 | 0 |
| Polymère acrylique | épaississant | 0,5 | 0,5 |
| TOTAL | | 100 | 100 |

| Composant de la couche 3b2 | rôle | % en liquide | % en phase solide, après cuisson |
|---|---|---|---|
| Résine silicone : RS1 ou RS2 ou RS3 ou RS4 ou RS5 ou RS6 | liant | 30 | 44,8 |
| Polymères thermoplastiques : PES ou PAI ou PEEK | liant | 10 | 24,9 |
| di propylène glycol butyle éther | solvant | 3 | 0 |
| Ester d'acide gras | | 3 | 0,4 |
| Oxyde de Cr/Fe | pigment | 10 | 24,9 |
| Eau déionisée | solvant | 31,40 | 0 |
| Ether de polyglycol d'alcool gras | | 4,60 | 0,5 |
| Huile minérale | Agent anti-mousse | 2 | 0,5 |
| silice | | 5 | 3,7 |
| 2-amino-2-méthyl-1-propanol | | 0,5 | 1,14 |
| Polymère acrylique | épaississant | 0,5 | 0,4 |
| TOTAL | | 100 | 100 |

| Composant de la couche 3b3 | rôle | % en liquide | % en phase solide, après cuisson |
|---|---|---|---|
| Résine silicone RS2 | liant | 62 | 78,81 |
| Acétate de 2-méthoxy-1-méthyléthyle | solvant | 8 | 0 |
| Oxyde de Cr/Fe | Pigment | 10 | 21,19 |
| Butyl Glycol acétate | solvant | 1 | 0 |
| Butylacetate | solvant | 19 | 0 |
| TOTAL | | 100 | 100 |

La composition aqueuse de la couche 3b est préparée selon le principe du broyage à bille. Le broyage à billes s'effectue en jarre comme décrit plus haut. L'échantillon peut être broyé sous forme sèche ou dispersée dans un solvant approprié (par ex. dans l'eau, dans l'alcool ou dans un solvant). La dispersion peut également contenir certains adjuvants (comme un dispersant ou un anti-mousse).

L'épaisseur de cette couche 3b est comprise entre 10 µm à 20 µm, de préférence 12 µm à 15 µm.

**Couche intermédiaire (3b') et couche de finition (3c)**

Le substrat, sur lequel est appliqué la couche 3a et la couche 3b continue telle que décrite ci-dessus, est revêtu d'un revêtement anti-adhésif multicouches composé d'une couche intermédiaire 3b' (6 - 8 µm) qui est séchée 4 minutes à 100°C et d'une couche de finition 3c (14 - 18 µm). L'ensemble étant finalement chauffé à 250°C pendant 1 heure, c'est-à-dire que le procédé ne comprend qu'une seule étape de cuisson, après le dépôt des différentes couches.

Les compositions des couches intermédiaires 3b' sont déposées par pulvérisation et sont telles que décrites ci-dessous : couche 3b'1 et couche 3b'2 :

| Composant de la couche intermédiaire 3b'1 | rôle | % en liquide | % en phase solide, après cuisson |
|---|---|---|---|
| Résine silicone : RS1 ou RS2 ou RS3 ou RS4 ou RS5 ou RS6 | liant | 30 | 73,5 |
| di propylène glycol butyle éther | solvant | 3 | 0 |
| Ester d'acide gras | Agent mouillant | 3 | 0,6 |

(suite)

| Composant de la couche intermédiaire 3b'1 | rôle | % en liquide | % en phase solide, après cuisson |
|---|---|---|---|
| mica | paillettes | 3 | 12,3 |
| Oxyde de Cr/Fe | pigment | 1 | 4,1 |
| Eau déionisée | solvant | 46,40 | 0 |
| Ether de polyglycol d'alcool gras | Agent émulsionnant | 4,60 | 0,8 |
| Huile minérale | Agent anti-mousse | 2 | 0,8 |
| silice | | 5 | 6,1 |
| 2-amino-2-méthyl-1-propanol | | 0,5 | 0 |
| Polymère acrylique | épaississant | 1,5 | 1,8 |
| TOTAL | | 100 | 100 |
| **Composant de la couche intermédiaire 3b'2** | **rôle** | **% en liquide** | **% en phase solide, après cuisson** |
| Résine silicone : RS1 ou RS2 ou RS3 ou RS4 ou RS5 ou RS6 | liant | 30 | 80 |
| di propylène glycol butyle éther | solvant | 5 | 0 |
| Ether de poly glycol propoxylé | Agent mouillant | 1 | 0,1 |
| Rouge de périlène | pigment | 3 | 13,3 |
| Noir de carbone | pigment | 2 | 2,9 |
| Eau déionisée | solvant | 52 | 0 |
| Ether de poly glycol d'alcool gras | Agent émulsionnant | 2 | 0,4 |
| Huile minérale | Agent anti-mousse | 3 | 1,3 |
| 2-amino-2-méthyl-1-propanol | Agent tampon | 0,5 | 0 |
| Polymère acrylique | épaississant | 1,5 | 2 |
| TOTAL | | 100 | 100 |

| Composant de la couche intermédiaire 3b'3 | rôle | % en liquide | % en phase solide, après cuisson |
|---|---|---|---|
| Résine silicone : RS1 ou RS2 ou RS3 ou RS4 ou RS5 ou RS6 | liant | 30 | 75,4 |
| di propylène glycol butyle éther | solvant | 5 | 0 |
| Ether de polyglycol propoxylé | Agent mouillant | 1 | 0,1 |
| trioxyde de fer | pigment | 5 | 21,0 |
| Eau déionisée | solvant | 52 | 0 |
| Ether de polyglycol d'alcool gras | Agent émulsionnant | 2 | 0,3 |
| Huile minérale | Agent anti-mousse | 3 | 1,3 |
| 2-amino-2-méthyl-1-propanol | Agent tampon | 0,5 | 0 |
| Polymère acrylique | épaississant | 1,5 | 1,9 |

(suite)

| Composant de la couche intermédiaire 3b'3 | rôle | % en liquide | % en phase solide, après cuisson |
|---|---|---|---|
| TOTAL | | 100 | 100 |

Les compositions des couches finition 3c sont déposées par pulvérisation et sont telles que décrites ci-dessous : couche 3c1 à 3c10 :

| Composant de la couche de finition 3c1 | rôle | % en liquide | % en phase solide, après cuisson |
|---|---|---|---|
| Résine silicone RS1 | liant | 35 | 95,5 |
| di propylène glycol butyle éther | solvant | 6 | 0 |
| Ether de polyglycol propoxylé | | 2 | 0,3 |
| Huile minérale | Agent anti-mousse | 1 | 0,5 |
| Mica | pigment | 0,5 | 2,3 |
| Eau déionisée | solvant | 50,5 | 0 |
| Ether de polyglycol d'alcool gras | Agent émulsionnant | 4 | 0,7 |
| 2-amino-2-méthyl-1-propanol | Agent tampon | 0,5 | 0 |
| Polymère acrylique | épaississant | 0,5 | 0,7 |
| TOTAL | | 100 | 100 |

| Composant de la couche de finition 3c2 | rôle | % en liquide | % en phase solide, après cuisson |
|---|---|---|---|
| Résine silicone RS1 | liant | 35 | 91,5 |
| di propylène glycol butyle éther | solvant | 6 | 0 |
| ester anionique dans éthanol/eau | Agent mouillant | 1 | 0,1 |
| Huile minérale | Agent anti-mousse | 1 | 0,4 |
| Polysiloxane modifié polyéther | huile | 0,5 | 2,2 |
| huile polyydiméthylsiloxane | huile | 1 | 4,4 |
| Eau déionisée | solvant | 50,50 | 0 |
| Ether de poly glycol d'alcool gras | Agent émulsionnant | 4 | 0,7 |
| 2-amino-2-méthyl-1-propanol | Agent tampon | 0,5 | 0 |
| Polymère acrylique | épaississant | 0,5 | 0,7 |
| TOTAL | | 100 | 100 |

| Composant de la couche de finition 3c3 | rôle | % en liquide | % en phase solide, après cuisson |
|---|---|---|---|
| Résine silicone RS1 | liant | 67 | 100 |
| Acétate de 2-méthoxy-1-méthyléthyle | solvant | 33 | 0 |

| Composant de la couche de finition 3c4 | rôle | % en liquide | % en phase solide, après cuisson |
|---|---|---|---|
| Résine silicone RS4 | liant | 69 | 100 |

(suite)

| Composant de la couche de finition 3c4 | rôle | % en liquide | % en phase solide, après cuisson |
|---|---|---|---|
| Acétate de 2-méthoxy-1-méthyléthyle | solvant | 31 | 0 |

| Composant de la couche de finition 3c5 | rôle | % en liquide | % en phase solide, après cuisson |
|---|---|---|---|
| Résine silicone RS4 | liant | 80 | 100 |
| Acétate de 2-méthoxy-1-méthyléthyle | solvant | 20 | 0 |

| Composant de la couche de finition 3c6 | rôle | % en liquide | % en phase solide, après cuisson |
|---|---|---|---|
| Résine silicone RS1 | liant | 75 | 87,38 |
| Acétate de 2-méthoxy-1-méthyléthyle | solvant | 8 | 0 |
| méthyle phényle polysiloxane | Agent d'écoulement | 0,5 | 0,97 |
| Noir de carbone | Pigment | 5 | 9,71 |
| Fumée de silice post traitée diméthyle dichlorosilane | charge | 1 | 1,94 |
| Butyl Glycol acétate | solvant | 1 | 0 |
| Butylacetate | solvant | 9,5 | 0 |
| TOTAL | | 100 | 100 |

| Composant de la couche de finition 3c7 | rôle | % en liquide | % en phase solide, après cuisson |
|---|---|---|---|
| Résine silicone RS1 | liant | 75 | 94,74 |
| Acétate de 2-méthoxy-1-méthyléthyle | solvant | 8 | 0 |
| Fumée de silice post traitée diméthyle dichlorosilane | charge | 2 | 4,21 |
| mica | Pigment | 0,5 | 1,05 |
| Butyl Glycol acétate | solvant | 1 | 0 |
| Butylacetate | solvant | 13,5 | 0 |
| TOTAL | | 100 | 100 |

| Composant de la couche de finition 3c8 | rôle | % en liquide | % en phase solide, après cuisson |
|---|---|---|---|
| Résine silicone RS6 | liant | 30 | 74,26 |
| Fumée de silice post traitée diméthyle dichlorosilane | charge | 2 | 8,25 |
| di propylène glycol butyle éther | solvant | 4,5 | 0 |
| Ester d'acide gras | | 3 | 5,94 |
| Mica | pigment | 0,5 | 2,06 |
| Eau déionisée | solvant | 51,6 | 0 |
| Ether de polyglycol d'alcool gras | Agent émulsionnant | 5,5 | 4,99 |
| Huile minérale | Agent anti-mousse | 1,9 | 4 |
| 2-amino-2-méthyl-1-propanol | Agent tampon | 0,5 | 0 |
| Polymère acrylique | épaississant | 0,5 | 0,5 |

(suite)

| Composant de la couche de finition 3c8 | rôle | % en liquide | % en phase solide, après cuisson |
|---|---|---|---|
| TOTAL | | 100 | 100 |

| Composant de la couche de finition 3c9 | rôle | % en liquide | % en phase solide, après cuisson |
|---|---|---|---|
| Résine silicone RS2 | liant | 70 | 94,74 |
| Acétate de 2-méthoxy-1-méthyléthyle | solvant | 8 | 0 |
| Fumée de silice post traitée diméthyle dichlorosilane | charge | 2 | 4,21 |
| mica | Pigment | 0,5 | 1,05 |
| Butyl Glycol acétate | solvant | 1 | 0 |
| Butylacetate | solvant | 13,5 | 0 |
| TOTAL | | 100 | 100 |

| Composant de la couche de finition 3c10 | rôle | % en liquide | % en phase solide, après cuisson |
|---|---|---|---|
| Résine silicone RS1 | liant | 60 | 92,78 |
| Acétate de 2-méthoxy-1-méthyléthyle | solvant | 8 | 0 |
| Fumée de silice post traitée diméthyle dichlorosilane | charge | 2 | 4,21 |
| mica | Pigment | 0,5 | 1,05 |
| Butyl Glycol acétate | solvant | 1 | 0 |
| Huile polyydiméthylsiloxane | huile | 1 | 2,06 |
| Butylacetate | solvant | 19,7 | 0 |
| TOTAL | | 100 | 100 |

Méthode d'évaluation des propriétés du revêtement antiadhésif : PERFORMANCE TEST à L'ŒUF

La méthode d'évaluation des propriétés du revêtement antiadhésif est réalisée à partir du test à l'œuf adapté de la norme AFNOR NF D 21-511 paragraphe 3.3.2, et mis en œuvre de la manière suivante :

On nettoie l'échantillon, puis on essuie l'eau restée sur la surface.
La surface intérieure du corps de récipient est préalablement séchée.
On chauffe le récipient de cuisson sur une gazinière à une température comprise entre 140 et 170°C.
On casse un œuf de calibre 60/65 que l'on verse au centre sur le récipient de cuisson chaud et on attend que l'œuf ait coagulé (6 à 9 minutes); on retire l'œuf du récipient de cuisson à l'aide d'une spatule, on nettoie le revêtement à l'aide d'une éponge végétale humide et on évalue au travers de cette action les propriétés antiadhésives du récipient de cuisson, puis on les consigne :

Note de 100 : l'œuf s'enlève entièrement à l'aide d'une spatule plastique ;
Note de 75 : l'œuf ne s'enlève pas entièrement mais le revêtement est facilement nettoyé par une éponge humide,
Note de 50 : l'œuf ne s'enlève pas entièrement mais le revêtement est nettoyable par une éponge humide,
Note de 25 : l'œuf ne s'enlève pas entièrement et le revêtement n'est pas nettoyé par une éponge humide.
Note de 0 : l'œuf ne s'enlève pas et le revêtement ne peut pas être nettoyé par une éponge humide.

| | Constructions / architectures des éléments de cuisson selon invention |
|---|---|
| Couche de base (3a) | 3a1 ou 3a2 ou 3a3 ou 3a4 |

(suite)

| | Constructions / architectures des éléments de cuisson selon invention | | | | | | | | | |
|---|---|---|---|---|---|---|---|---|---|---|
| Couche intermédiaire (3b) | 3b1 ou 3b2 ou 3b3 | | | | | | | | | |
| Couche intermédiaire (3b') | 3b'1 ou 3b'2 ou 3b'3 | | | | | | | | | |
| Couche de finition (3c) | 3c1 | 3c2 | 3c3 | 3c4 | 3c5 | 3c6 | 3c7 | 3c8 | 3c9 | 3c10 |
| Notes obtenues au test à l'œuf | 50 | 50 | 50 | 50 | 50 | 50 | 50 | 50 | 50 | 50 |

L'ensemble des revêtements à base de résines silicones-polyesters présente de bonnes propriétés anti-adhésives tout en étant adhérentes au métal.

## Revendications

**1.** Elément de cuisson revêtu (1) pour article culinaire ou appareil électrique de cuisson, comportant un substrat métallique (2) revêtu sur au moins une face (2a) par au moins les couches suivantes et dans cet ordre à partir du substrat métallique (2) :

(3a) sous-couche d'accroche comprenant entre 20 % et 100 % en poids du poids total de la sous-couche d'un ou plusieurs polymère(s) ($\alpha$) choisis dans le groupe constitué des polyaryléthercétones (PAEK) et d'un ou plusieurs polymère(s) choisis dans le groupe constitué des polyetherimides (PEI), des polyimides (PI), des polyamide imides (PAI) et des polybenzymidazole (PBI), avec un ratio en poids PAEK:(PEI+PI+PAI+PBI) compris entre 1:1 et 15:1,
(3b) éventuellement, une ou plusieurs couche(s) intermédiaire(s) constituée(s) d'un ou plusieurs agent(s) colorant(s) et éventuellement

- d'une ou plusieurs résine(s) silicone, et/ou
- d'un ou plusieurs polymère(s) thermoplastique(s) et/ou,
- d'une ou plusieurs charge(s), et/ou
- d'un ou plusieurs additif(s)

(3c) une couche de finition constituée d'une ou plusieurs résine(s) silicone en une proportion supérieure ou égale à 20% en poids par rapport au poids total de la couche (3c) et éventuellement :

- d'un ou plusieurs polymère(s) thermoplastique(s), et/ou
- d'une ou plusieurs charge(s), et/ou
- d'un ou plusieurs additif(s), et/ou
- de paillettes.

**2.** Elément de cuisson revêtu (1) selon la revendication 1, **caractérisé en ce que** la sous-couche d'accroche (3a) comprend un ou plusieurs polymères ($\beta$) choisi(s) dans le groupe constitué des polysulfures de phénylène (PPS) et des polyethersulfones (PES).

**3.** Elément de cuisson revêtu (1) selon la revendication 2, **caractérisé en ce que** la sous-couche d'accroche (3a) comprend au moins 20 %, de préférence au moins 25 %, en poids du poids total de la sous-couche d'un ou plusieurs polymères ($\beta$) choisi(s) dans le groupe constitué des polysulfures de phénylène (PPS) et des polyethersulfones (PES).

**4.** Elément de cuisson revêtu (1) selon l'une quelconque des revendications précédentes, **caractérisé en ce que** la sous-couche d'accroche (3a) comprend, lorsqu'elles sont présentes moins de 40 %, de préférence moins de 30 %, en poids du poids total de la sous-couche de charges, de préférence entre 5 et 25 % en poids.

**5.** Elément de cuisson revêtu (1) selon l'une quelconque des revendications précédentes, **caractérisé en ce que** la sous-couche d'accroche (3a) comprend une ou plusieurs résine(s) acrylique(s).

**6.** Elément de cuisson revêtu (1) selon l'une quelconque des revendications précédentes, **caractérisé en ce que** le ou

les polyaryléthercétones (PAEK) est(sont) choisi(s) dans le groupe constitué de : polyethercétones (PEK), polyetherethercetone (PEEK), polyethercétonecétones (PEKK), polyetherethercétonecétones (PEEKK) et polyethercétoneethercétonecétones (PEKEKK).

**7.** Elément de cuisson revêtu (1) selon l'une quelconque des revendications précédentes, **caractérisé en ce que** le ou les polymère(s) ($\alpha$) est(sont) choisi(s) dans le groupe constitué des polyetherethercétones (PEEK) et des polyamide imides (PAI).

**8.** Elément de cuisson revêtu (1) selon l'une quelconque des revendications précédentes **caractérisé en ce que** le ou les agent(s) colorant(s) est/sont choisi(s) dans le groupe constitué de pigments thermochromes, pigments thermostables, paillettes, de préférence paillettes hologramme, et leurs mélanges.

**9.** Elément de cuisson revêtu (1) selon l'une quelconque des revendications précédentes **caractérisé en ce que** la couche (3c) comprend un ou plusieurs polymère(s) thermoplastique(s), la proportion de polymère(s) thermoplastique(s) dans la couche (3c) étant inférieure à 50 %, de préférence à 40 %.

**10.** Elément de cuisson revêtu (1) selon l'une quelconque des revendications précédentes **caractérisé en ce que** l'épaisseur de la sous-couche d'accroche (3a) est comprise entre 10 et 100 $\mu$m, de préférence entre 20$\mu$m et 80$\mu$m, préférentiellement entre 30 et 60 $\mu$m.

**11.** Procédé de fabrication d'un élément de cuisson revêtu (1) selon l'une quelconque des revendications précédentes **caractérisé par** les étapes suivantes :

i. une étape de fourniture d'un support (2) métallique, comprenant deux faces opposées,
ii. de manière optionnelle, une étape de traitement de la face (2a) du support (2), pour obtenir une face (2a) traitée favorisant l'adhérence d'une sous-couche d'accroche (3a) sur le support (2)
iii. dépôt sur la face (2a) du support (2) d'une ou plusieurs couches continues de la sous-couche d'accroche (3a) telle que définie dans les revendications précédentes,
iv. éventuellement séchage et/ou frittage à une T°C > 400°C
v. éventuellement application de la ou des couche(s) (3ab) et/ou de la ou des couche(s) intermédiaire(s) (3b) ;
vi. application de la couche de finition (3c) ;
vii. cuisson à une T° de 230°C à 420°C.

**12.** Procédé selon la revendication 11, **caractérisé en ce que** la température de frittage est comprise entre 400°C et 440°C.

**13.** Article culinaire (100) comprenant un élément de cuisson revêtu (1) conforme à l'une quelconque des revendications 1 à 10.

**14.** Article culinaire (100) selon la revendication 13 **caractérisé en ce qu'**il comporte une face de chauffe (6) destinée à être mise en contact avec une source de chauffage extérieure, la face de chauffe (6) étant opposée à la face de cuisson (5) destinée à être mise en contact avec les aliments lors de la cuisson, préférentiellement choisi dans le groupe constitué de casserole, poêle, poêlons ou caquelons pour fondue ou raclette, fait-tout, wok, sauteuse, crêpière, grill, plancha, marmite, cocotte, cuve de cuiseur ou de machine à pain, moule culinaire.

**15.** Appareil électrique de cuisson (200) comportant un élément de cuisson revêtu (1) et une source de chauffage (210) configurée pour chauffer ledit élément de cuisson revêtu (1), **caractérisé en ce que** ledit élément de cuisson revêtu (1) est conforme à l'une des revendications 1 à 10, préférentiellement choisi dans le groupe constitué de crêpière électrique, appareil électrique à raclette, appareil électrique à fondue, grill électrique, plancha électrique, cuiseur électrique, machine à pain, appareil électrique de cuisson sous pression, les gaufriers, les cuiseurs à riz et les confituriers.

## Patentansprüche

**1.** Beschichtetes Kochelement (1) für Kochartikel oder elektrische Kochgeräte, bestehend aus einem metallischen Substrat (2), das auf mindestens einer Seite (2a) mit mindestens den folgenden Schichten in dieser Reihenfolge vom metallischen Substrat (2) beschichtet ist:

(3a) Haftunterschicht, umfassend zwischen 20 Gew.% und 100 Gew.% des Gesamtgewichts der Unterschicht eines oder mehrerer Polymer(e) ($\alpha$), ausgewählt aus der Gruppe bestehend aus Polyaryletherketonen (PAEK) und einem oder mehreren Polymer(en), ausgewählt aus der Gruppe bestehend aus Polyetherimiden (PEI), Polyimiden (PI), Polyamideimiden (PAI) und Polybenzymidazol (PBI), mit einem Gewichtsverhältnis PAEK:(PEI+PI+PAI+PBI) zwischen 1:1 und 15:1,
(3b) gegebenenfalls eine oder mehrere Zwischenschicht(en), bestehend aus einem oder mehreren Farbmittel(n) und gegebenenfalls

- einem oder mehreren Silikonharz(en), und/oder
- einem oder mehreren thermoplastischen Polymer(en), und/oder
- einem oder mehreren Füllstoff(en), und/oder
- einem oder mehreren Zusatzstoff(en)

(3c) eine Schlussschicht, bestehend aus einem oder mehreren Silikonharz(en) in einem Anteil von 20 Gew.% oder mehr des Gesamtgewichts der Schicht (3c) und gegebenenfalls:

- einem oder mehreren thermoplastischen Polymer(en), und/oder
- einem oder mehreren Füllstoff(en), und/oder
- einem oder mehreren Zusatzstoff(en), und/oder
- Glitter.

**2.** Beschichtetes Kochelement (1) nach Anspruch 1, **dadurch gekennzeichnet, dass** die Haftunterschicht (3a) ein oder mehrere Polymere ($\beta$) umfasst, die aus der Gruppe bestehend aus Polyphenylensulfiden (PPS) und Polyethersulfonen (PES) ausgewählt sind.

**3.** Beschichtetes Kochelement (1) nach Anspruch 2, **dadurch gekennzeichnet, dass** die Haftunterschicht (3a) mindestens 20 Gew.%, vorzugsweise mindestens 25 Gew.%, des Gesamtgewichts der Unterschicht, eines oder mehrerer Polymere ($\beta$), die aus der Gruppe bestehend aus Polyphenylensulfiden (PPS) und Polyethersulfonen (PES) ausgewählt sind, umfasst.

**4.** Beschichtetes Kochelement (1) nach einem der vorhergehenden Ansprüche, **dadurch gekennzeichnet, dass** die Haftunterschicht (3a) bei Vorliegen weniger als 40 Gew.%, vorzugsweise weniger als 30 Gew.%, des Gesamtgewichts der Unterschicht Füllstoffe umfasst, vorzugsweise zwischen 5 und 25 Gew.%.

**5.** Beschichtetes Kochelement (1) nach einem der vorhergehenden Ansprüche, **dadurch gekennzeichnet, dass** die Haftunterschicht (3a) ein oder mehrere Acrylharz(e) umfasst.

**6.** Beschichtetes Kochelement (1) nach einem der vorhergehenden Ansprüche, **dadurch gekennzeichnet, dass** die Polyaryletherketone (PAEK) aus der Gruppe bestehend aus: Polyetherketonen (PEK), Polyetheretherketonen (PEEK), Polyetherketonketonen (PEKK), Polyetheretherketonketonen (PEEKK) und Polyetherketonetherketonketonen (PEKEKK) ausgewählt sind.

**7.** Beschichtetes Kochelement (1) nach einem der vorhergehenden Ansprüche, **dadurch gekennzeichnet, dass** das oder die Polymer(e) ($\alpha$) aus der Gruppe bestehend aus Polyetheretherketonen (PEEK) und Polyamideimiden (PAI) ausgewählt sind.

**8.** Beschichtetes Kochelement (1) nach einem der vorhergehenden Ansprüche, **dadurch gekennzeichnet, dass** das oder die Farbmittel aus der Gruppe bestehend aus thermochromischen Pigmenten, hitzebeständigen Pigmenten, Glitter, vorzugsweise holografischem Glitter, und deren Mischungen ausgewählt sind.

**9.** Beschichtetes Kochelement (1) nach einem der vorhergehenden Ansprüche, **dadurch gekennzeichnet, dass** die Schicht (3c) ein oder mehrere thermoplastische Polymer(e) umfasst, wobei der Anteil der thermoplastischen Polymer(en) in der Schicht (3c) weniger als 50 %, vorzugsweise 40 %, beträgt.

**10.** Beschichtetes Kochelement (1) nach einem der vorhergehenden Ansprüche, **dadurch gekennzeichnet, dass** die Dicke der Haftunterschicht (3a) zwischen 10 und 100 $\mu$m, vorzugsweise zwischen 20 $\mu$m und 80 $\mu$m, besonders bevorzugt zwischen 30 $\mu$m und 60 $\mu$m beträgt.

**11.** Verfahren zur Herstellung eines beschichteten Kochelements (1) nach einem der vorhergehenden Ansprüche, **gekennzeichnet durch** folgende Schritte :

i. Bereitstellung eines metallischen Trägers (2), der zwei gegenüberliegende Seiten umfasst,
ii. gegebenenfalls Behandlung der Seite (2a) des Trägers (2), um eine behandelte Seite (2a) zu erhalten, die die Haftung einer Haftunterschicht (3a) auf dem Träger (2) begünstigt,
iii. Abscheidung auf die Seite (2a) des Trägers (2) einer oder mehreren kontinuierliche Schichten der Haftunterschicht (3a) gemäß den vorhergehenden Ansprüchen,
iv. gegebenenfalls Trocknung und/oder Sintern bei einer Temperatur > 400°C,
v. gegebenenfalls Abscheidung einer oder mehreren Schicht(en) (3ab) und/oder einer oder mehreren Zwischenschicht(en) (3b),
vi. Abscheidung der Schlussschicht (3c),
vii. Backen bei einer Temperatur von 230°C bis 420°C backen.

**12.** Verfahren nach Anspruch 11, **dadurch gekennzeichnet, dass** die Sintertemperatur zwischen 400°C und 440°C liegt.

**13.** Kochartikel (100), umfassend ein beschichtetes Kochelement (1) gemäß einem der Ansprüche 1 bis 10.

**14.** Kochartikel (100) nach Anspruch 13, **dadurch gekennzeichnet, dass** er eine Heizfläche (6) umfasst, die dazu bestimmt ist, mit einer externen Wärmequelle in Kontakt zu sein, wobei die Heizfläche (6) der Kochfläche (5) gegenüberliegt, die dazu bestimmt ist, während des Kochens mit Lebensmitteln in Kontakt zu sein, vorzugsweise gewählt aus der Gruppe bestehend aus Kochtopf, Pfanne, Fondue- oder Raclette-Potts, Schmortopf, Wok, Sautierpfanne, Crêpe-Pfanne, Grill, Plancha, Topf, Cocotte, Koch- oder Brotbackmaschine-Tank, Backform.

**15.** Elektrisches Kochgerät (200) mit einem beschichteten Kochelement (1) und einer Wärmequelle (210), die dazu konfiguriert ist, das beschichtete Kochelement (1) zu erwärmen, **dadurch gekennzeichnet, dass** das beschichtete Kochelement (1) einem der Ansprüche 1 bis 10 entspricht, vorzugsweise gewählt aus der Gruppe bestehend aus elektrischer Crêpe-Maker, elektrisches Raclette-Gerät, elektrisches Fondue-Gerät, elektrischer Grill, elektrische Plancha, elektrischer Kocher, Brotbackmaschine, Druckkochgerät, Waffeleisen, Reiskocher und Konfitüre-Macher.

**Claims**

**1.** Coated cooking element (1) for culinary articles or electric cooking appliances, comprising a metal substrate (2) coated on at least one face (2a) with at least the following layers in this order from the metal substrate (2):

(3a) an adhesion sublayer comprising between 20% and 100% by weight of the total weight of the sublayer of one or more polymer(s) ($\alpha$) selected from the group consisting of polyaryletherketones (PAEKs) and of one or more polymer(s) selected from the group consisting of polyetherimides (PEI), polyimides (PI), polyamide-imides (PAI), and polybenzimidazoles (PBI), with a weight ratio PAEK:(PEI+PI+PAI+PBI) between 1:1 and 15:1,
(3b) optionally, one or more intermediate layer(s) composed of one or more coloring agent(s) and optionally

◦ one or more silicone resin(s), and/or
◦ one or more thermoplastic polymer(s) and/or,
◦ one or more filler(s), and/or
◦ one or more additive(s)

(3c) a finishing layer composed of one or more silicone resin(s) in a proportion of at least 20% by weight relative to the total weight of the layer (3c) and optionally:

◦ one or more thermoplastic polymer(s), and/or
◦ one or more filler(s), and/or
◦ one or more additive(s), and/or
o flakes.

**2.** Coated cooking element (1) according to claim 1, **characterized in that** the adhesion sublayer (3a) comprises one or more polymers ($\beta$) selected from the group consisting of polyphenylene sulfides (PPS) and polyethersulfones (PES).

**3.** Coated cooking element (1) according to claim 2, **characterized in that** the adhesion sublayer (3a) includes at least 20%, preferably at least 25%, by weight of the total weight of the sublayer of one or more polymers (β) selected from the group consisting of polyphenylene sulfides (PPS) and polyethersulfones (PES).

**4.** Coated cooking element (1) according to any preceding claim, **characterized in that** the adhesion sublayer (3a) includes, when present, less than 40%, preferably less than 30%, by weight of the total weight of the sublayer of fillers, preferably between 5% and 25% by weight.

**5.** Coated cooking element (1) according to any preceding claim, **characterized in that** the adhesion sublayer (3a) includes one or more acrylic resin(s).

**6.** Coated cooking element (1) according to any preceding claim, **characterized in that** the polyaryletherketones (PAEK) are selected from the group consisting of polyetherketones (PEK), polyetheretherketone (PEEK), polyetherketoneketones (PEKK), polyetheretherketoneketones (PEEKK), and polyetherketoneetherketoneketones (PEKEKK).

**7.** Coated cooking element (1) according to any preceding claim, **characterized in that** the polymer(s) (α) is selected from the group consisting of polyetheretherketones (PEEK) and polyamide-imides (PAI).

**8.** Coated cooking element (1) according to any preceding claim, **characterized in that** the coloring agent(s) is selected from the group consisting of thermochromic pigments, thermostable pigments, flakes, preferably holographic flakes, and their mixtures.

**9.** Coated cooking element (1) according to any preceding claim, **characterized in that** layer (3c) includes one or more thermoplastic polymer(s), the proportion of thermoplastic polymer(s) in layer (3c) being less than 50%, preferably less than 40%.

**10.** Coated cooking element (1) according to any preceding claim, **characterized in that** the thickness of the adhesion sublayer (3a) is comprised between 10 and 100 μm, preferably between 20 μm and 80 μm, most preferably between 30 and 60 μm.

**11.** Manufacturing process of a coated cooking element (1) according to any preceding claim, **characterized by** the following steps:

i. providing a metal substrate (2), comprising two opposite faces,
ii. optionally treating the face (2a) of the substrate (2), to obtain a treated face (2a) promoting the adhesion of an adhesion sublayer (3a) on the substrate (2),
iii. depositing on the face (2a) of the substrate (2) one or more continuous layers of the adhesion sublayer (3a) as defined in the preceding claims,
iv. optionally drying and/or sintering at a temperature > 400°C,
v. optionally applying one or more layer(s) (3ab) and/or one or more intermediate layer(s) (3b),
vi. applying the finishing layer (3c),
vii. baking at a temperature of 230°C to 420°C.

**12.** Process according to claim 11, **characterized in that** the sintering temperature is comprised between 400°C and 440°C.

**13.** Culinary article (100) comprising a coated cooking element (1) according to any of claims 1 to 10.

**14.** Culinary article (100) according to claim 13, **characterized in that** it includes a heating face (6) intended to be in contact with an external heat source, the heating face (6) being opposite to the cooking face (5) intended to be in contact with food during cooking, preferably chosen from the group consisting of saucepan, frying pan, fondue or raclette pots, stewpot, wok, sauté pan, crepe pan, grill, plancha, pot, cocotte, cooker or bread machine tank, culinary mold.

**15.** Electric cooking appliance (200) comprising a coated cooking element (1) and a heat source (210) configured to heat said coated cooking element (1), **characterized in that** said coated cooking element (1) is according to any of claims 1 to 10, preferably chosen from the group consisting of electric crepe maker, electric raclette appliance, electric fondue

device, electric grill, electric plancha, electric cooker, bread machine, electric pressure cooking device, waffle irons, rice cookers, and jam makers.

[Fig.1]

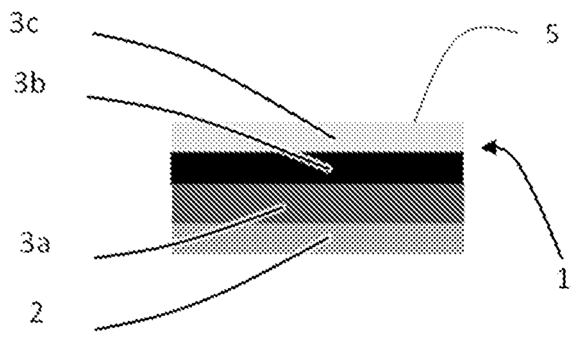


[Fig.2]

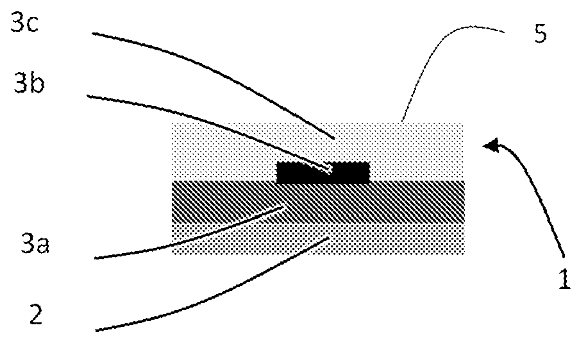


[Fig.3]

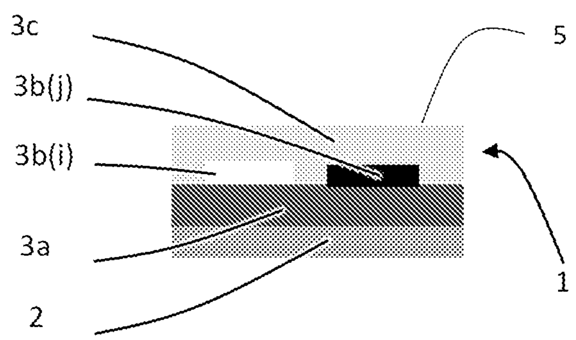

[Fig.4]

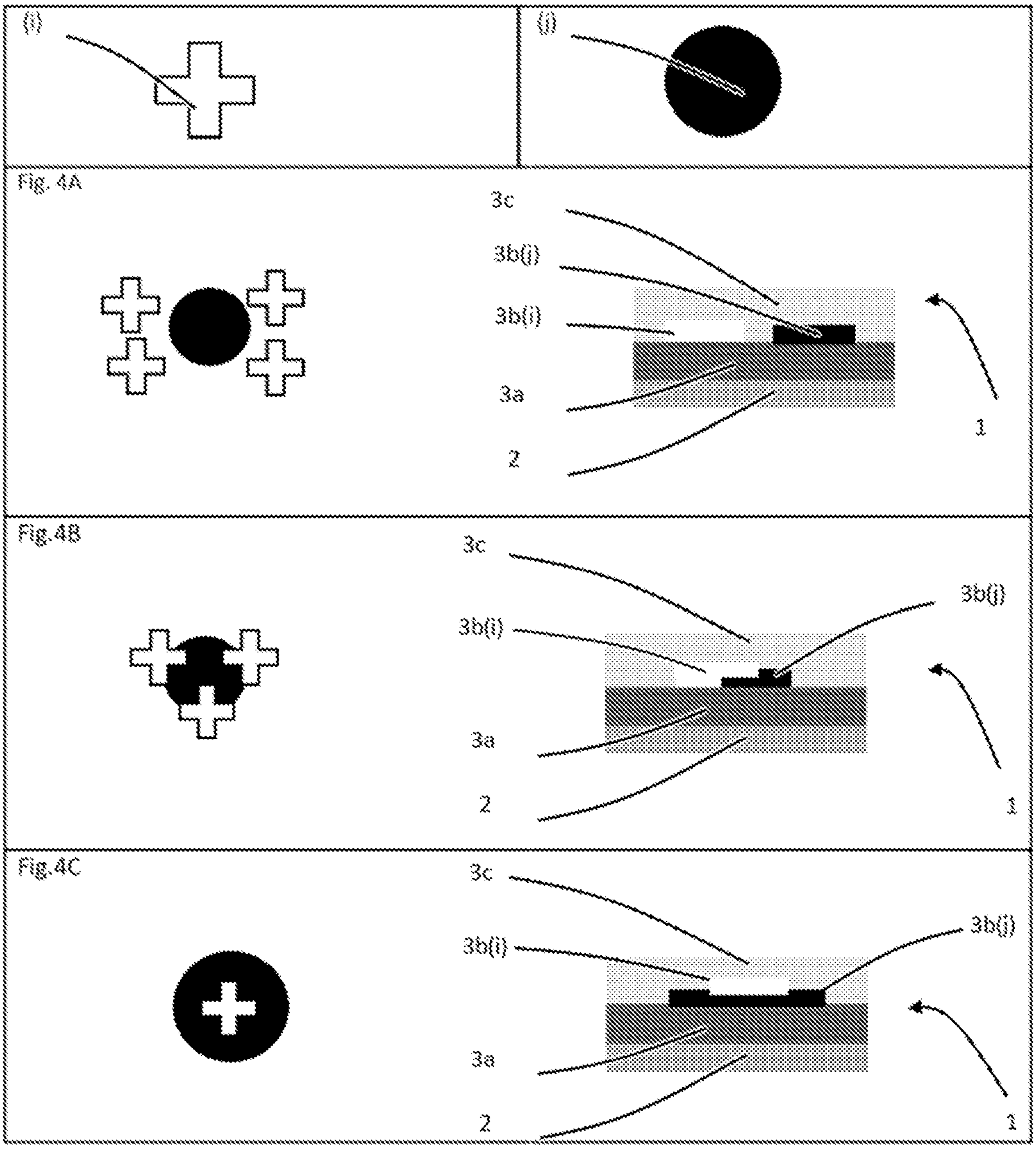
(i)
(j)
Fig. 4A
3c
3b(j)
3b(i)
3a
2
1
Fig.4B
3c
3b(j)
3b(i)
3a
2
1
Fig.4C
3c
3b(i)
3b(j)
3a
2
1

[Fig. 5]

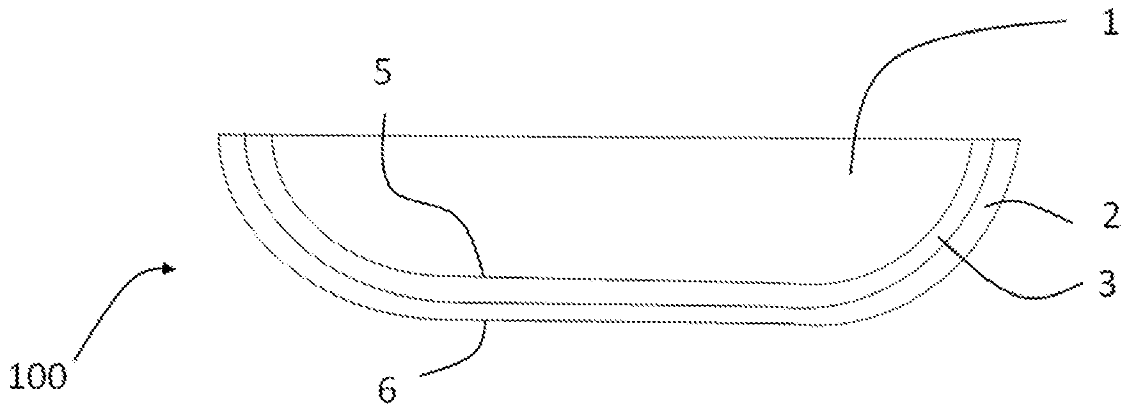


[Fig. 6]

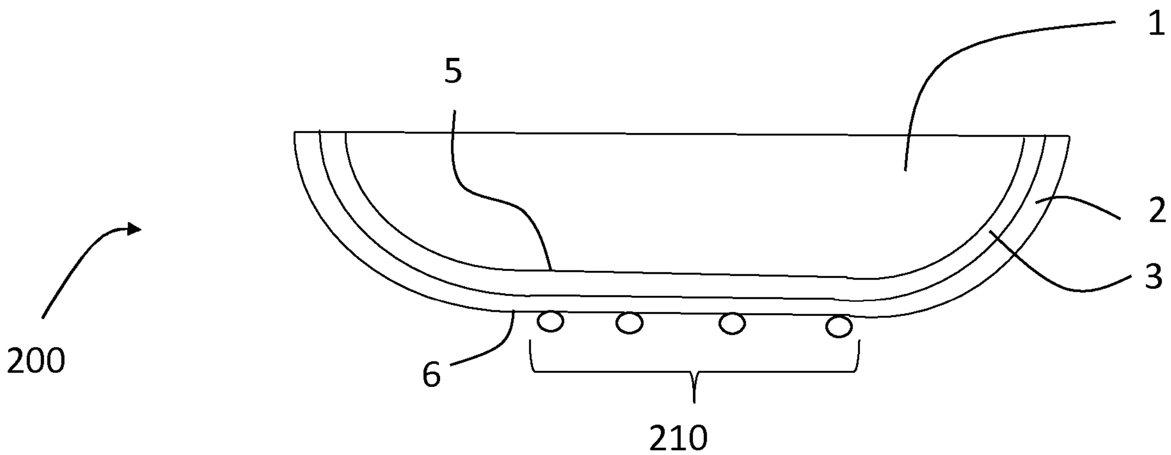

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 200054895 A
- WO 2010130954 A
- FR 2871038
- WO 00054896 A
- US 6596380 B1
- US 2022073785 A1